(19) **Europäisches Patentamt / European Patent Office / Office européen des brevets**

(11) **EP 2 505 603 A1**

(12) **EUROPEAN PATENT APPLICATION**
published in accordance with Art. 153(4) EPC

(43) Date of publication:
**03.10.2012 Bulletin 2012/40**

(21) Application number: **10833419.4**

(22) Date of filing: **24.11.2010**

(51) Int Cl.:
**C08J 5/04** (2006.01)

(86) International application number:
**PCT/JP2010/071426**

(87) International publication number:
**WO 2011/065576 (03.06.2011 Gazette 2011/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2009   JP 2009268835
26.11.2009   JP 2009268836**

(71) Applicant: **Teijin Limited
Osaka-shi, Osaka 541-0054 (JP)**

(72) Inventors:
• **ARAKAWA, Motoomi**
  **Gotemba-shi**
  **Shizuoka 412-0048 (JP)**
• **SADANOBU, Jirou**
  **Gotemba-shi**
  **Shizuoka 412-0048 (JP)**

(74) Representative: **Hallybone, Huw George
Carpmaels & Ransford
One Southampton Row
London
WC1B 5HA (GB)**

(54) **COMPOSITE MATERIAL**

(57)     The present invention is a composite material comprising an organic filament having a melting point of 200˚C or higher and a thermoplastic resin, characterized in that the organic filament is in the form of a twisted yarn cord or a woven or knitted fabric composed of twisted yarn cord. The composite material of the present invention is excellent in impact strength and can be used as a core material also in a sandwich material.

Fig. 1

# EP 2 505 603 A1

**Description**

TECHNICAL FIELD

The present invention relates to an organic filament-reinforced thermoplastic resin composite material, particularly to a composite material suitable for an application and parts which require impact resistance, as well as a sandwich material using the composite material as a core material.

BACKGROUND ART

Plastics, especially thermoplastic resins can be processed by various molding methods and are the material indispensable for our daily life. However, since the flexibility of thermoplastic resins sometimes lead to low strength and low stiffness, reinforcement has been done using inorganic staples such as glass fiber and carbon fiber for applications which require high strength and high stiffness. However, composite materials consisting of organic thermoplastic resin and inorganic glass fiber and the like are difficult to recycle, causing a waste problem. Furthermore, glass fiber is heavy due to its high specific gravity and has a problem that it is not suitable for weight reduction. In addition, although reinforcement by inorganic fiber is effective to improve the strength and stiffness of a composite material, it is not so effective for the performance such as impact resistance.

Therefore, conjugation of thermoplastic resin and organic fiber has been investigated. For example, Patent Document 1 proposes to make a composite by impregnating aligned organic filament using a roller into a molten thermoplastic resin ejected from an extruder in order to improve the strength. Patent Document 2 proposes to make a composite of a thermoplastic elastomer of tensile modulus less than 1 GPa and elongation of 300% or more with a fabric of silk fiber to improve impact resistance of the resin composition.

On the other hand, rubber materials made of rubber such as latex and thermoplastic elastomer such as EPDM (ethylene-propylene copolymer) reinforced with organic fiber are used for the application such as tire, hose, belt, etc.

In addition, although the strength of the composite material can be improved by the effect of organic fiber as described in Patent Document 1, the significance of organic fiber is its impact resistance. Patent Document 1 does not mention the impact resistance. Although Patent Document 2 improves the impact resistance of the composite material using silk fiber, there were problems of productivity and economy such as its cost because silk fiber is a natural fiber and expensive. There was also a problem that the natural fiber such as silk fiber generally has a low strength compared with synthetic fiber.

Furthermore, although the composite materials made of rubber and thermoplastic elastomer reinforced with organic fiber have no problem of impact resistance, their hardness and elastic modulus are low because their matrix, i.e., rubber or thermoplastic elastomer, is soft.

[Citation List]

[Patent Document 1] Japanese Patent Laid-Open No. 2002-144395
[Patent Document 2] Japanese Patent Laid-Open No. 2009-530469

DISCLOSURE OF THE INVENTION

[Problem to be solved by invention]

The present invention has been done in view of these existing problems and aims at providing a composite material comprising an organic filament and a thermoplastic resin which is excellent in recyclability, lightweightness, productivity and economic efficiency and suitable for the application and parts which require impact resistance.

[Means for solving the problem]

As a result of extensive investigation to achieve the above-mentioned purpose, the present inventors have found that the above problems including the recyclability could be solved by conjugating a thermoplastic resin with organic filament having a melting point of 200˚C or higher. Thus, the present invention is a composite material comprising an organic filament having a melting point of 200˚C or higher and a thermoplastic resin, characterized in that the organic filament is in the form of a twisted yarn cord or a woven or knitted fabric composed of twisted yarn cords, a molded body thereof, and a sandwich material having the composite material as a core material.

[Effects of invention]

The present invention provides a composite material economically for which high impact resistance is required maintaining high strength and high modulus of elasticity. Furthermore, the composite material of the present invention is excellent in lightweightness, productivity and recyclability. In addition, a molded body can be provided from the composite material of the present invention, suitably including a shock absorbing material. In addition, by using a sandwich material having the composite material as a core material, a molded body, which is a shock absorbing material having high strength and high stiffness, can be provided. Such a molded body can be favorably used as automobile construction parts, automobile exterior parts and automobile interior parts.

[Brief description of the drawings]

Fig. 1 is a cross sectional photograph (1,000 magnification) of the composite material of Example 1.
Fig. 2 is a cross sectional photograph (1,000 magnification) of the composite material of Comparative Example 6.

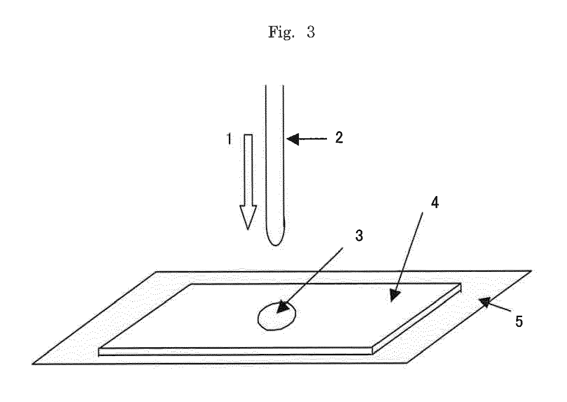

Fig. 3 is a schematic diagram showing the measurement method of a high-speed punching test in the Examples.

BEST MODE FOR CARRYING OUT THE INVENTION

The embodiments of the present invention will be described sequentially hereafter.

[Organic filament]

Examples of the organic filament having a melting point of 200°C or higher used in the present invention include polyetherether ketone fiber, polyphenylene sulfide fiber, polyethersulfon fiber, aramid fiber, polybenzoxazole fiber, polyarylate fiber, polyketone fiber, polyester fiber, polyamide fiber, polyvinylalcohol fiber, etc. Since organic filament is used as a reinforcement material of the composite material and the molding temperature of the resin particularly useful among the thermoplastic resins which is the matrix of the composite material is 170°C or higher with minor exceptions, organic filament having a melting point of 200°C or higher is used. If the melting point of the organic filament is lower than the molding temperature, the fiber melts with the thermoplastic resin and the composite material cannot be obtained. In addition, significant thermal deterioration of the organic filament during the molding process is not preferable as the reinforcement material. Since the orientation of the polymer and the crystal in the organic filament generally are likely to be relaxed around the melting point, it is preferable that the melting point of the organic filament is 10°C or more higher than the molding temperature. It is more preferable that the melting point of the organic filament is 20°C or more higher than the molding temperature.
In addition, although the molding temperature of commodity type plastics to which polyolefm and the like belong, which are most commonly used among the thermoplastic resins, is usually 170°C or higher, the molding temperature of engineering plastics having higher heat resistance, such as polyamide, polycarbonate, polyester, etc. is 230°C or higher. Therefore, it is more preferable that the melting point of the organic filament used in the present invention is 250°C or higher, because it can be used not only for commodity type plastics but also for engineering plastics.
The melting point of 200°C or higher means herein that the fiber does not melt below 200°C and the fiber includes those which have substantially no melting point. However, the organic filament having a melting point is preferable and the substantial upper limit of the melting point is 350°C.
In the present invention, polyester filament, polyamide filament and polyvinylalcohol filament are preferable among the organic filaments having a melting point of 200°C or higher because of the balance of the properties, such as mechanical characteristics and heat resistance, and the price. Among those, polyester filament or nylon filament is particularly preferable.
Examples of the backbone of polyester filament include polyalkylene naphthalenedicarboxylate, polyalkylene terephthalate, stereocomplex type polylactic acid, etc. Among those, polyalkylene naphthalenedicarboxylate and polyalkylene terephthalate having a melting point of 250°C or higher are preferable. These may be used alone, as a mixture of two or more kinds, or as a copolymer.
As polyalkylene naphthalenedicarboxylate, polyester having akylene-2,6-naphthalenedicarboxylate or alkylene-2,7-naphthalenedicarboxylate as the major repeat unit is preferable. Content of alkylene naphthalenedicarboxylate in the polyester is preferably 90 mol% or more, more preferably 95 mol% or more, even more preferably 96 to 100 mol%. As the alkylene group, either aliphatic alkylene group or alicyclic alkylene group may be used, alkylene group having 2 to 4 carbons being preferable. Polyalkylene naphthalenedicarboxylate is preferably polyethylene naphthalenedicarboxylate, more preferably polyethylene-2,6-naphthalenedicarboxylate.

As polyalkylene terephthalate, polyester having alkylene terephthalate as the major repeat unit is preferable. Content of alkylene terephthalate in the polyester is preferably 90 mol% or more, more preferably 95 mol% or more, even more preferably 96 to 100 mol%. As the alkylene group, either aliphatic alkylene group or alicyclic alkylene group may be used, alkylene group having 2 to 4 carbons being preferable. Polyalkylene terephthalate is preferably polyethyleneterephthalate.

The total repeat unit of the polyester fiber may contain a third component to the extent that the purpose of the present invention is not adversely affected. Examples of such third component include (a) compounds having two ester-forming functional groups, for example, aliphatic dicarboxylic acid such as oxalic acid, succinic acid, sebacic acid and dimer acid; alicyclic dicarboxylic acid such as cyclopropane dicarboxylic acid and hexahydroterephthalic acid; aromatic dicarboxylic acid such as phthalic acid, isophthalic acid, naphthalene-2,7-dicarboxylic acid and diphenylcarboxylic acid; carboxylic acid such as diphenylether dicarboxylic acid, diphenoxyethane dicarboxylic acid and sodium 3,5-dicarboxybenzenesulfonic acid; oxycarboxylic acid such as glycolic acid, p-oxybenzoic acid and p-oxyethoxybenzoic acid; oxy compound such as propylene glycol, trimethylene glycol, diethylene glycol, tetramethylene glycol, hexamethylene glycol, neopentylene glycol, p-xylene glycol, 1,4-cyclohexane dimethanol, bisphenol A, p,p'-dihydroxyphenylsulfone, 1,4-bis-(β-hydroxyethoxy)benzene, 2,2-bis(p-β-hydroxyethoxyphenyl)propane and polyalkylene glycol; functional derivatives thereof; and highly polymerized compound derived from the aforementioned carboxylic acid, oxycarboxylic acid, oxy compound or functional derivative thereof; and (b) compounds having one ester-forming functional group, for example, benzoic acid, benzyloxy benzoic acid, methoxypolyalkylene glycol, etc. In addition, (c) compounds having three or more ester-forming functional groups, for example, glycerine, pentaerythritol, trimethylolpropane, etc. may be used in the range where the polymer is substantially linear. In addition, these polyesters may contain delustering agent such as titanium dioxide and stabilizer such as phosphoric acid, phosphorous acid and esters thereof.

Examples of nylon filament include those consisting of aliphatic polyamide such as nylon 66, nylon 6, polyamide 46 resin, polyamide 610 resin, etc. They may be used alone or in a mixture of two or more kinds. Among these, nylon 66 or nylon 6 fiber is preferable because they are good in general versatility and inexpensive, nylon 66 fiber being more preferable because its melting point is 250˚C or higher.

The organic filament in the present invention has a continuous length and the form of the organic filament is a twisted yarn cord or a woven or knitted fabric composed of twisted yarn cords. Fiber with discontinuous length or staple may be used in combination with the organic filament.

It is preferable that the organic filament used in the present invention is a multifilament. Generally, organic filaments include a monofilament which is commercially available as a relatively thick single yarn and a multifilament constituted by relatively thin plural single yarns and forming a bundle. Monofilament is expensive because of its low productivity and used for special usage such as a screen gauze, whereas multifilament is used for common garment and industrial use. Relatively inexpensive multifilament is preferable for the composite material of the present invention. The number of single yarns constituting the multifilament is preferably 2 to 10,000, more preferably 50 to 5,000, and even more preferably 100 to 1,000. If the number of single yarns exceeds 10,000, its production is difficult and handling property of the fiber as a multifilament becomes significantly worse.

Total fineness of the organic filament as a multifilament used for the present invention is preferably 100 dtex to 10,000 dtex, more preferably 200 dtex to 8,000 dtex, and even more preferably 500 dtex to 5,000 dtex. If the fineness is below 100 dtex, reinforcement effect for the composite material is not expectable due to low strength of the yarn itself. If the fineness exceeds 10,000 dtex, production of the yarn becomes difficult.

In the present invention, fineness of the single yarns constituting the organic filament is preferably 1 to 30 dtex, the preferred upper limit being 25 dtex, especially 20 dtex. The preferred lower limit is 1.5 dtex. The most preferred range is 2 to 20 dtex. Such range allows for achieving the purpose of the present invention. If the fineness of the single yarn is below 1 dtex, yarn-making property tends to be problematic. If the fineness is too large, interfacial strength between the fiber and the resin decreases, leading to lowering the properties of the composite material.

Tensile strength of the organic filament used in the present invention is preferably 6 to 11 cN/dtex, more preferably 7 to 10 cN/dtex. If the tensile strength is below 6 cN/dtex, the strength of the composite material obtained tends to be too low.

In addition, dry heat shrinkage rate at 180˚C of the organic filament of the present invention is preferably 20% or less, more preferably 18% or less. If the dry heat shrinkage rate exceeds 20%, size of the fiber tends to significantly change by heat during processing, causing defects in the shape of the molded reinforced resin.

There is no particular limit in the manufacturing method of the organic filament having these properties. For example, the fiber can be produced by separately stretching the unstretched yarn after melt spinning and temporal winding or by continuously stretching the unstretched yarn without winding. The fiber obtained has a high strength and is excellent in dimensional stability. In addition, the organic filament can be obtained by wet spinning a solution containing the polymer which is the raw material.

In addition, the surface of the fiber may be treated with a suitable agent in order to improve the properties of the molded resin article. In this case, the surface treatment agent may be adhered to the surface of the fiber in an amount of 0.1 to 10 weight parts, preferably 0.1 to 3 weight parts based on 100 weight parts of the fiber. The surface treatment agent may be selected as needed depending on the type of the thermoplastic resin.

[Twisted yarn]

The form of the organic filament of the present invention is a twisted yarn cord or a woven or knitted fabric composed of the twisted yarn cords. By twisting the yarn, the fiber bundle is compressed and impregnation of the resin into the fiber bundle is restrained. As will be discussed later on the impregnation of the resin in detail, it is preferable that the organic filament is multifilament and the thermoplastic resin is substantially impregnated between the fiber bundles. It is also preferable that the thermoplastic resin is substantially not impregnated within the fiber bundle of the organic filament.

In the case where the organic filament is multifilament, since the original yarn supplied by a yarn manufacturer is in non-twisted state, the alignment of the single yarn may be disturbed and the fiber property may not be developed sufficiently when the original yarn is processed as it is. In addition, untwisted yarn is not easy to handle due to its low convergence. It is effective to twist the yarn in order to improve the alignment and handling property of the yarn. Furthermore, twisting is effective regarding the impact resistance, because the twisted yarn cord has higher elongation rate and higher bending fatigue property than the original yarn. In addition, the single yarn constituting the multifilament may be most closely packed by twisting.

The twist structure is not particularly limited. Single twisting in which the organic filament is twisted only once or double twisting in which two or more yarns are used and composed of first twist and second twist may be used. In view of the strength and handling property of the yarn, double twisting is preferable because occurrence of snarl may be restricted. Number of the yarns constituting each of first and second twist may be determined as needed depending on the properties required. Twist count of the fiber is determined in the range of 1 to 1,000 per m, preferably in the range of 10 to 1,000. Among these, in view of the toughness, which is a product of strength and elongation of the twisted yarn cord, the twist count per m is preferably 30 to 700, more preferably 50 to 500. Twist count exceeding 1,000 is not preferable in view of the reinforcement effect for the composite material, because the strength of the twisted yarn cord decreases too much. In addition, twist count exceeding 1,000 extremely deteriorates the productivity. While the first and second twist counts are determined in the aforementioned range, it is preferable that the twist count is determined with the twisting coefficient matched for the first and second twist, in view of restricting the snarl. In addition, balanced twisting in which the first and second twist counts are the same is also preferable in the aspect of durability of the twisted yarn cord, as used for tire cords.

As a form of the organic filament in the present invention, both of one-directional material made by aligning plural twisted yarn cords as they are and a fabric form, i.e., two-directional material such as woven or knitted fabric, may be used. The composite material of the present invention may be selected as needed from each of one-directional and two-directional materials depending on the form used. The twisted yarn cord is characterized by fineness of the original yarn, number of twisting, interval between the cord, etc. The weight per unit area of one layer of the preferred twisted yarn cord is 30 to 500 g/m$^2$, more preferably 50 to 300 g/m$^2$. If the weight per unit area of one layer of the twisted yarn cord is smaller than 30 g/m$^2$, necessary energy absorption performance cannot be attained. Conversely, if the weight per unit area exceeds 500 g/m$^2$, the resin is hard to impregnate between the fiber bundles and the composite material tends to become too heavy.

Examples of the weave structure in the woven fabric include plain weave, twill weave, satin weave, etc. Among them, plain weave is preferable because the resin is easily impregnated between the organic filament bundles. The warp density of the woven fabric is preferably 5 to 50 per 2.5 cm, more preferably 10 to 40, in view of impregnation property of the resin between the filament bundles. If the warp density is below 5, mesh opening tends to occur due to the increased mobility of the yarn, significantly deteriorating the handling property of the fabric. If the warp density exceeds 50, the resin is hardly impregnated between the fiber bundles because the distance between them is too small and the intended composite material cannot be obtained. The weft density of the woven fabric is preferably 1 to 50 per 2.5 cm, more preferably 1 to 40, in view of impregnation property of the resin between the filament bundles. Among the woven fabrics, there is a cord fabric in which the warp undertakes a role for the fabric performance and the weft is used to restrict the extreme mesh opening of the warp. Such a cord fabric, which is used for tire cords and has the extremely small number of the weft, can also be applied to the present invention. Therefore, the weft density of one or more per 2.5 cm is sufficient. Conversely, if the warp density is as many as 50 or more, the resin is hardly impregnated between the fiber bundles because the distance between them is too small and the intended composite material cannot be obtained. The density of the warp and weft may be the same or different as long as it is in the above-mentioned range. The weight per unit area of the woven fabric, i.e., the weight of one layer of the organic filament woven fabric in the composite material is preferably 30 g to 500 g per 1 m$^2$, more preferably 50 g to 400 g per 1 m$^2$, in view of the impregnation property of the resin between the organic filament bundles. If the weight per unit area is below 30 g, the reinforcement effect for the composite material cannot be attained because the strength of the woven fabric decreases. If the weight per unit area exceeds 500 g, the resin is hardly impregnated between the filament bundles, because the distance between them is too small, and the intended composite material cannot be obtained.

Examples of the knit structure in the knitted fabric include warp knit, weft knit, raschel knit, etc. Among them, raschel knit is preferable in view of the knit strength, because it tends to give tougher structure. The weight per unit area of the knitted fabric, i.e., the weight of one layer of the organic filament knitted fabric in the composite material is preferably 30 g to 500 g per 1 m$^2$, more preferably 50 g to 400 g per 1 m$^2$, in view of the impregnation property of the resin between the organic filament bundles. If the weight per unit area is below 30 g, the reinforcement effect for the composite material cannot be attained because the strength of the knitted fabric decreases. If the weight per unit area exceeds 500 g, the resin is hardly impregnated between the filament bundles, because the distance between them is too small, and the intended composite material cannot be obtained.

[Resin impregnation to the fiber]

In the present invention, although the resin is impregnated between the fiber bundles, it is preferable that the fiber bundle has a part in which the resin is not impregnated, in other words that the degree of impregnation within the fiber bundle is small. Better properties can be attained by keeping the inside of the organic filament bundle substantially not impregnated with the thermoplastic resin. In the composite material of the present invention, it is preferable that the space between the organic filament bundles has a structure in which the thermoplastic resin is substantially impregnated. If the space between the filament bundles is not fully filled with the resin, strength of the composite material decreases because the voids remain between the filament bundles. In the present invention, the structure in which the thermoplastic resin is substantially impregnated between the organic filament bundles means that the void percentage between the filament bundles is 10% or less. This may be verified by weighing a sample the volume of which can be calculated or observing the cross section by a microscope.

In addition, in the composite material of the present invention, the inside of the organic filament bundle may be substantially impregnated with the thermoplastic resin or not impregnated. However, it is more preferable that the inside of the filament bundle is substantially not impregnated with the resin in view of the impact resistance, because it is considered that the fiber should have a freedom to some extent in the material to be effective for energy absorption. In the present invention, "inside of the organic filament bundle, which is multifilament, is substantially not impregnated with the resin" means that the degree of resin impregnation into the inside of the fiber bundle is 50% or less in the composite material with a void percentage between the fiber bundles of 10% or less.

This may be verified by calculating the number of single yarns constituting the multifilament that can be taken out from the organic filament removed from the composite material, i.e., the percentage of free single yarns. For example, in the case of the organic filament constituted from 250 single yarns, if 150 free single yarns can be taken out, the percentage of free single yarns is 60%, meaning that the resin impregnation percentage is the remaining 40%. In addition, the resin impregnation percentage may also be confirmed by a microscopic observation using an electron microscope or optical microscope and specifically calculated from the ratio of the area of spaces in the cross section of the composite material.

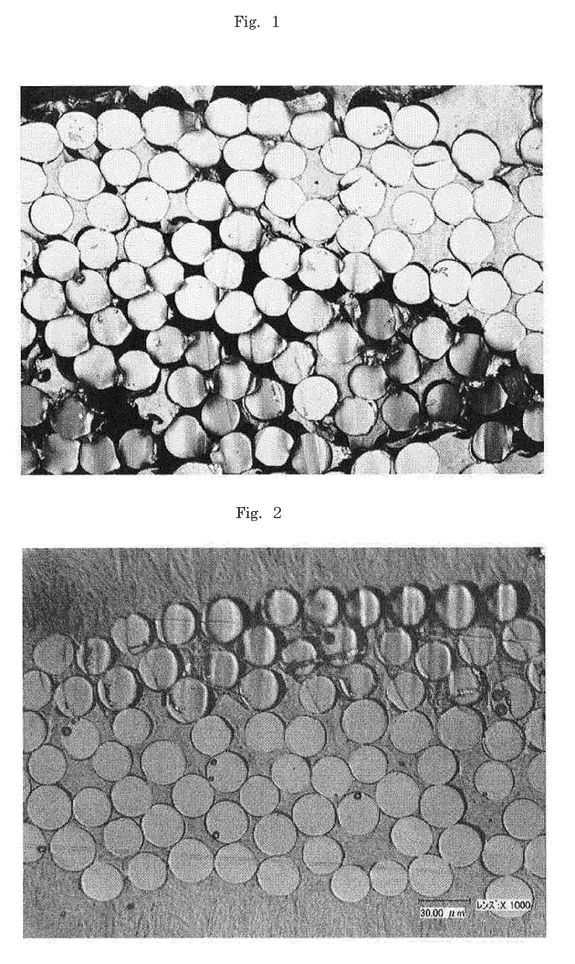

Examples of the cross sectional photograph of the composite material of the present invention and one corresponding to the comparative example are shown in Fig. 1 and Fig. 2, respectively. Plural circles observed in the photograph are the profile of the cross section of the single yarn of the organic fiber and the dense aggregates of the circles are the fiber bundles. White matters outside the circles are the thermoplastic resin and black matters are the void parts. Voids are observed within the bundle in Fig.1, whereas the thermoplastic resin impregnated within the fiber bundles is observed in Fig. 2.

The above structure allows for keeping the strength of the composite material by the organic filament and the thermoplastic resin between the fiber bundles. In addition, since the organic filament, strictly speaking the single yarn constituting the fiber has a freedom of deformation and movement in the composite material, impact received by the composite material can be absorbed by this freedom that is also associated with fracture, leading to the material excellent in the impact resistance.

Extent of impregnation of the resin within the fiber bundle can be controlled by the structure of the twisted yarn, woven fabric and knitted fabric as mentioned above, as well as by selection of the type of the thermoplastic resin and molding pressure, temperature of the thermoplastic resin, etc. during the process of impregnation of the resin between the fiber bundles as will be mentioned later. On the other hand, if the thermosetting resin is impregnated into the fiber bundle of the organic filament to obtain the composite material, the resin is impregnated deeply within the fiber bundle due to the low viscosity of the thermosetting resin before curing, resulting in the deteriorated property, for example, low impact resistance.

[Composite material]

The present invention is a composite material comprising an organic filament having a melting point of 200˚C or higher and a thermoplastic resin. As for the composition ratio of the organic filament and the thermoplastic resin in the present invention, the thermoplastic resin is preferably 20 to 900 parts, more preferably 25 to 400 parts, based on 100 parts of the organic filament in the volume ratio. If the ratio of the thermoplastic resin is less than 20 parts based on 100 parts of the organic filament, too many voids occur between the filament fiber bundles, resulting in a substantial decrease in the mechanical strength of the composite material. Conversely, if the ratio exceeds 900 parts, the reinforcement effect of the organic filament is not developed sufficiently.

The weight per unit area of the organic filament per 10 mm of the thickness of the composite material is preferably 1,000 to 12,000 g/m$^2$, more preferably 2,000 to 10,000 g/m$^2$. If the weight per unit area of the organic filament is less than 1,000 g/m$^2$, energy absorption performance required is unlikely to develop. Conversely, if the weight per unit area exceeds 12,000 g/m$^2$, voids are likely to occur between the filament fiber bundles and the mechanical strength of the composite material may significantly decrease.

[Thermoplastic resin]

Since the composite material of the present invention aims at providing high strength and high modulus of elasticity associated with the impact resistance, it is preferable that the matrix is a common thermoplastic resin. Elastomers such as thermoplastic elastomer and rubber are not suitable. As a selection criteria, it is preferable that the thermal deformation temperature of the matrix is 80˚C or higher. The deflection temperature under load is used as an indication of thermal deformation property.

Examples of the thermoplastic resin constituting the composite material of the present invention include vinyl chloride resin, vinylidene chloride resin, vinyl acetate resin, polyvinylalcohol resin, polystyrene resin, acrylonitrile-styrene resin (AS resin), acrylonitrile-butadiene-styrene resin (ABS resin), acrylic resin, methacrylic resin, polyethylene resin, polypropylene resin, polyamide 6 resin, polyamide 11 resin, polyamide 12 resin, polyamide 46 resin, polyamide 66 resin, polyamide 610 resin, polyacetal resin, polycarbonate resin, polyethyleneterephthalate resin, polyethylenenaphthalate resin, polybutyleneterephthalate resin, polyarylate resin, polyphenyleneether resin, polyphenylenesulfide resin, polysulfone resin, polyethersulfone resin, polyetheretherketone resin, etc.

Among these, vinyl chloride resin, polystyrene resin, ABS resin, polyethylene resin, polypropylene resin, polyamide 6 resin, polyamide 66 resin, polyacetal resin, polycarbonate resin, polyethyleneterephthalate resin, polyethylenenaphthalate resin, polybutyleneterephthalate resin and polyarylate resin are more preferable. Especially preferable are polypropylene resin, polyethyleneterephthalate resin, polycarbonate resin, polyamide 6 resin and polyamide 66 resin.

[Production method]

The production method of the composite material of the present invention and the molded body composed of the composite material comprises conjugation by impregnating a resin between the fiber bundle and shaping of the composite material obtained. Method to impregnate the resin between the fiber bundles is not particularly limited and may be selected as needed depending on the form of the organic filament to be used. For example, if the organic filament is in a form of fabric such as woven or knitted fabric, composite material with a thermoplastic resin impregnated between the filament bundles can be obtained by pressurizing or depressurizing a laminated woven or knitted fabric with a resin film or unwoven fabric at a temperature at which the thermoplastic resin melts and the organic fiber does not melt by using a press molding machine or a vacuum molding machine. In addition, if the organic filament is a twisted yarn cord, composite material with a thermoplastic resin impregnated between the filament bundles can be obtained by extrusion molding or pultrusion molding besides the above-mentioned press molding and vacuum molding. For example, plural twisted yarn cords set on a creel stand are introduced into an impregnation die of a pultrusion molding machine after taking them out under a constant tension and aligning them using a yarn guide. A UD sheet of the continuous fiber can be obtained by impregnating the molten resin between the twisted yarn cords during this process followed by pulling out the composite from the impregnation die and cooling.

Shaping method is not particularly limited, either. Shaping may be done simultaneously with the impregnation of the resin between the fiber bundles or separately after impregnating the resin between the fiber bundles. If the resin impregnation and shaping are done simultaneously, the molded body can be easily obtained by utilizing a mold with which a desired shape can be obtained. Also in the case where the resin impregnation and shaping are done separately, shaping can be relatively easily done utilizing a molding frame with a desired shape.

Devising the shaping method in this way, a variety of members from a big, plain and thin member to a small, complex-shaped member can be made. Examples of the shape of the molded body include not only a flat plate but also a three dimensional form such as corrugation, truss, honeycomb, etc.

Impregnation of the resin between and within the organic filament bundles may be controlled as needed according to the above-mentioned structure of the twisted yarn cord, woven and knitted fabric and selection of the thermoplastic resin, as well as the molding conditions. Generally, increase in the molding temperature and pressure results in decrease in the melt viscosity of the resin, causing increase in the degree of penetration of the resin. The range of the molding temperature is preferably between the melting temperature and the melting temperature plus 50˚C if the resin is crystalline, whereas it is between the glass transition temperature and the melting temperature plus 50˚C if the resin is amorphous. Preferably the molding pressure is in the range of 0.01 MPa to 20 MPa and the molding time is in the range of 30 seconds to 1 hour.

As for the combination of the organic filament and the thermoplastic resin, it is preferable that the melting point of the fiber is 10˚C or more higher than the melting point of the resin if the resin used is crystalline. On the other hand, if the resin used is amorphous, it is preferable that the melting point of the fiber is 10˚C or more higher than the glass transition temperature of the resin. From this standpoint, a combination in which the organic filament is polyester filament or nylon filament and the thermoplastic resin is polypropylene resin, polyethyleneterephthalate resin, polycarbonate resin, polyamide 6 resin, or polyamide 66 resin is preferable. More specifically, if the organic filament is nylon 6 filament, combination with polypropylene resin as the thermoplastic resin is preferable. If the organic filament is polyethyleneterephthalate fiber or nylon 66 filament, combination with polypropylene resin, polycarbonate resin and polyamide 6 resin as the thermoplastic resin is preferable. If the organic filament is polyethylenenaphthalate fiber, polypropylene resin, polyethyleneterephthalate resin, polycarbonate resin, polyamide 6 resin or polyamide 66 resin as the thermoplastic resin is preferable. In addition, if the organic filament is polyethylenenaphthalate fiber of high melting point type having a melting point of 280˚C or higher, a regular type polyethylenenaphthalate resin having a melting point of below 280˚C can be used, besides the above-mentioned thermoplastic resins.

[Shock absorption property]

The composite material of the present invention has an absorption energy of 10 J or more in a high speed punching test using a test piece holder with an opening diameter of 40 mm and a striker with a diameter of 10 mm at an impact speed of 11 m/sec. More preferably the absorption energy is 12 J or more. As mentioned above, the composite material having a desired energy absorption property can be obtained depending on the type and weight of the organic filament, the type of the thermoplastic resin as a matrix and the degree of impregnation between and within the fiber bundle. Substantial upper limit of the absorption energy is 500 J.

[Sandwich material]

The present invention further encompasses a sandwich material using the above-mentioned composite material as a core material. The sandwich material of the present invention is configured by using the above-mentioned composite material for a core material as a shock absorbing material in combination with a skin layer. A high stiffness material is preferable as the skin material, which will be discussed later. As for the volume ratio of the skin material and core material, it is preferable that the core material is 40 to 9,900 parts based on 100 parts of the skin material. More preferably, the core material is 100 to 1,000 parts based on 100 parts of the skin material. If the volume of the core material is less than 40 parts based on 100 parts of the skin material, sufficient shock absorbing property is unlikely to develop, although the strength and stiffness of the sandwich material are high. Conversely, if the volume of the core material is more than 9,900 parts based on 100 parts of the skin material, the strength and stiffness remain at the similar level to the core material itself and there is no necessity to do a troublesome task to make a sandwich material.

[Skin material]

It is preferable that the skin material in the sandwich material is a high stiffness material composed of a fiber-reinforced composite material containing a reinforced fiber with a specific modulus of elasticity (E) of 2.5 or more defined by equation (1) below.

$$E=M/D/9.8 \qquad (1)$$

(wherein E is a specific modulus of elasticity, M is a modulus of elasticity of the fiber (MPa), and D is a density of the fiber (g/cm$^3$).)

Specific examples of such reinforced fiber include inorganic fiber such as glass fiber, carbon fiber, steel fiber (stainless steel fiber), and ceramic fiber, and aramid fiber, etc. Among these, glass fiber, carbon fiber, and aramid fiber are preferable due to their general versatility and handling property.

It is preferable that the reinforced fiber is a multifilament composed of plural single yarns (monofilament), because the monofilament is nonproductive and expensive. The number of the single yarns constituting the multifilament is preferably 2 to 100,000, more preferably 50 to 50,000, even more preferably 100 to 30,000. If the number of the single yarns exceeds 100,000, production is difficult and the handling property of the fiber as a multifilament is significantly deteriorated.

Total fineness of the reinforced fiber as a multifilament is preferably 100 dtex to 100,000 dtex, more preferably 200 dtex to 50,000 dtex, even more preferably 500 dtex to 30,000 dtex. If the fineness is less than 100 dtex, the productivity of the fiber is low, making the fiber expensive. If the fineness exceeds 100,000 dtex, production of the yarn becomes difficult.

The fineness of the single yarn constituting the reinforced fiber is preferably 0.1 to 20 dtex. The upper limit is preferably 15 dtex and especially 10 dtex. The lower limit is preferably 0.3 dtex. Most preferably the range is 0.5 to 5 dtex. Such a range allows for achieving the purpose of the present invention. If the fineness of the single yarn is less than 0.1 dtex, yarn making process may become difficult. If the fineness is too large, the reinforcement effect may decrease and the property of the sandwich material tends to be deteriorated.

Strength of the reinforced fiber constituting the high stiffness material is preferably 500 MPa or more, more preferably 1,000 MPa or more. If the strength is less than 500 MPa, the strength of the sandwich material obtained tends to be too low.

Modulus of elasticity of the reinforced fiber is preferably 30 GPa or more, more preferably 50 GPa or more. If the modulus is less than 30 GPa, the stiffness of the sandwich material obtained tends to be to low.

Production method of the fiber having such properties is not particularly limited. For example, the intended reinforced fiber can be obtained by various methods such as stretching the unstretched yarn obtained by melt spinning, wet spinning a solution containing the raw material component, or calcining and carbonizing the fiber as a raw material.

In addition, the surface of the fiber may be treated with a suitable agent in order to enhance the properties of the sandwich material and the molded article. In this case, the surface treatment agent may be adhered to the surface of the fiber in an amount of 0.1 to 10 parts by weight, preferably 0.1 to 3 parts by weight based on 100 parts by weight of the fiber. The surface treatment agent may be selected as needed depending on the type of the thermoplastic resin.

In addition, examples of the matrix constituting the high stiffness material include a thermoplastic resin such as vinyl chloride resin, vinylidene chloride resin, vinyl acetate resin, polyvinylalcohol resin, polystyrene resin, acrylonitrile-styrene resin (AS resin), acrylonitrile-butadiene-styrene resin (ABS resin), acrylic resin, methacrylic resin, polyethylene resin, polypropylene resin, polyamide 6 resin, polyamide 11 resin, polyamide 12 resin, polyamide 46 resin, polyamide 66 resin, polyamide 610 resin, polyacetal resin, polycarbonate resin, polyethyleneterephthalate resin, polyethylenenaphthalate resin, polybutyleneterephthalate resin, polyarylate resin, polyphenyleneether resin, polyphenylenesulfide resin, polysulfone resin, polyethersulfone resin, polyetherether ketone resin and a thermosetting resin such as epoxy resin, polyurethane resin, unsaturated polyester resin, phenol resin, urea resin, melamine resin, diallylphthalate resin. Among these, a thermoplastic resin which has excellent moldability, productivity and processability is preferable. Among the thermoplastic resins, vinyl chloride resin, polystyrene resin, ABS resin, polyethylene resin, polypropylene resin, polyamide 6 resin, polyamide 66 resin, polyacetal resin, polycarbonate resin, polyethyleneterephthalate resin, polyethylenenaphthalate resin, polybutyleneterephthalate resin and polyarylate resin are more preferable. Especially preferable are polypropylene resin, polyamide 6 resin and polyamide 66 resin.

In the high stiffness material for the skin material, examples of the form of the reinforced fiber include staples, filaments, and fabrics such as woven and knitted fabrics. These may be used properly as needed depending on the application of the sandwich material or molded body.

In addition, in the high stiffness material for the skin material, it is preferable that the matrix resin is impregnated within the reinforced fiber bundle. Degree of impregnation of the resin is preferably 80% or more in volume, more preferably 90% or more, even more preferably 95% or more. If the degree of impregnation of the resin within the fiber bundle is less than 80%, both of the strength and stiffness of the sandwich material do not reach the target level.

Degree of impregnation of the resin within the reinforced fiber bundle is verified by removing either of the fiber component or the resin component in the high stiffness material with known volume by dissolution, decomposition, combustion, etc. followed by calculating the weight difference before and after the treatment.

As for the composition ratio of the reinforced fiber to the matrix resin in the high stiffness material for the skin material, the matrix resin is preferably 20 to 900 parts, more preferably 25 to 400 parts in volume based on 100 parts of the reinforced fiber.

If the volume ratio of the matrix resin based on 100 parts of the reinforced fiber is less than 20 parts, voids are likely to occur in the material, resulting in significant decrease of the mechanical strength of the sandwich material. Conversely, if it is more than 900 parts, reinforcement effect of the reinforced fiber is not developed sufficiently.

The high stiffness material comprising the raw material, composition and structure as mentioned above can provide the sandwich material and the molded body with the strength and stiffness.

The matrix resin for the high stiffness material which is a skin material and the matrix resin for the composite material which is a core material and shock absorbing material are not necessarily the same and they may be different as long as they are the resins which weld or dissolve each other.

[Production of the sandwich material]

The sandwich material may be produced by either of conjugating the skin material and core material made separately beforehand or conjugating the raw materials for the skin material and core material in one stage.

For example, as a method to make conjugate in two stages, the reinforced fiber and the matrix resin which are the raw materials of the skin material and core material are charged in a press molding machine, vacuum molding machine, extrusion molding machine, pultrusion molding machine, etc. and molded individually. In this case, since it is preferable that the high stiffness material has the resin impregnated within the fiber bundle in view of properties, severer temperature, pressure and time conditions are often applied for molding of the high stiff material. The high stiffness material is then welded with the composite material for the core material, which has been molded under relatively mild conditions, using a press molding machine, vacuum molding machine, high frequency welding machine, etc. If the molding methods of the composite materials for the high stiffness material and the core material are similar and the molding conditions are not largely different, they may be molded in one stage.

In addition, the method to mold the sandwich material may be determined as needed depending on the shape of its application. If the matrix resin of the composite material is a thermoplastic resin, molding of the sandwich material with a simple shape is sometimes possible above the glass transition temperature of the matrix resin. In addition, even the article with a complex shape may be molded around the melting point of the matrix resin. Therefore, molding may be performed simultaneously with the conjugation or shaping and molding may be performed after making the substrate such as a flat plate and re-heating. Examples of the molding method include press molding and vacuum molding using a molding frame or a mold with a desired shape and members from a big, plain and thin member to a small, complex-shaped member can be made. Examples of the shape of the molded body include not only a flat plate but also a three dimensional form such as corrugation, truss, honeycomb, etc.

Impregnation of the resin between and within the fiber bundles may be controlled as needed according to the molding conditions. Generally, increase in the molding temperature and pressure results in decrease of the melt viscosity of the resin, causing increase in the degree of penetration of the resin. The range of the molding temperature is preferably between the melting temperature and the melting temperature plus 50°C if the resin is crystalline, whereas it is between the glass transition temperature and the melting temperature plus 50°C if the resin is amorphous. Preferably the molding pressure is in the range of 0.01 MPa to 20 MPa and the molding time is in the range of 30 seconds to 1 hour.

As for the combination of the fiber and the matrix resin, it is preferable that the melting point of the fiber is 10°C or more higher than the melting point of the resin if the resin used is crystalline. On the other hand, if the resin used is amorphous, it is preferable that the melting point of the fiber is 10°C or more higher than the glass transition temperature of the resin.

[Molded body]

The composite material and the sandwich material using the composite material as a core material can provide a molded body which is an shock absorbing material having a high strength and high stiffness. The present invention encompasses a molded body obtained from the above-mentioned composite material. The present invention encompasses a molded body obtained from the above-mentioned sandwich material.

[Automobile parts]

The composite material and the sandwich material using the composite material as a core material are favorably used as automobile construction parts, automobile exterior parts and automobile interior parts. The present invention encompasses the automobile construction parts, automobile exterior parts and automobile interior parts obtained from the above-mentioned composite material and/or sandwich material. Examples of the automobile construction parts include a crash structure and floor pan. Examples of the automobile exterior parts include a bumper, hood and fender. Examples of the automobile interior parts include an instrumental panel, door trim, center console and pillar cover.

The composite material is used for the shock absorbing member, such as a bumper, hood, fender, floor, seat, door trim, pillar cover, etc. due to its excellent shock absorption.

The sandwich material using the composite material as a core material is used for the above-mentioned applications as well as for the construction members such as a crash structure, floor pan, etc. due to its excellent shock absorbing property as well as stiffness.

[Examples]

The present invention will be described more specifically by referring to the examples hereafter. The present invention is in no way limited by these examples.

(1) Twist count measurement of the organic fiber

Samples of the original yarns were taken from woven and knitted fabrics and twisted yarn cords to measure twist count per 1 m (T/m). In the case where the original yarns were single-twisted, its twist count was measured. In the case of double twisting, twist count of each of the first and second twists was measured.

(2) Measurement of the volume fraction of the fiber in the fiber (organic filament and reinforced fiber)/resin

Samples of 1 $cm^2$ to 10 $cm^2$ are weighed. Soluble component is extracted using a reagent which dissolves or decomposes either of the fiber and resin. The residue is weighed after washing and drying. The volume fraction of the fiber and resin is calculated from the weight of the residue and soluble component and specific gravity of the fiber and resin. For example, if the resin is polypropylene, polypropylene can be solely dissolved by using hot toluene or xylene. If the resin is polyamide, polyamide can be decomposed by hot formic acid. If the resin is polycarbonate, polycarbonate can be dissolved by using hot chlorinated hydrocarbon. In addition, volume parts of the resin based on 100 parts of the fiber can be calculated from the volume fraction of the fiber in the fiber/resin. For example, if the volume fraction of the fiber is 50 %, volume parts of the fiber based on 100 parts of the resin is 100 parts.

(3) Evaluation of the fiber weight per unit area per 10 mm thickness of the composite material

Fiber weight per unit area ($g/m^2$) per 10 mm thickness of the composite material was calculated from the volume fraction of the fiber in the composite material and specific gravity of the fiber.

(4) Measurement of void ratio between the fiber bundles

Void ratio was calculated by microscopic observation of a section of the sample cut using a microtome, followed by binarization treatment between the fiber bundles.

(5) Evaluation of degree of impregnation of the resin into the fiber

As for the high stiffness material, the degree of impregnation of the resin was evaluated by calculating the proportion of the air bubbles after microscopic observation of a section of the sample. As for the composite material, ratio of free single yarn is calculated from the number of the single yarns constituting a multifilament which can be easily sorted out after sleaving the filament taken from the sample using tweezers or a needle. For example, in the case of the organic filament composed of 250 single yarns, if 150 free single yarns can be taken out, the ratio of free single yarn is 60%, meaning that the degree of impregnation of the resin is remaining 40% in the volume fraction.

(6) Tensile strength test

Tensile strength test of the high stiffness material and the sandwich material was performed using a Tensilon Universal Tester manufactured by A&D Co., Ltd. referring to JIS K 7165. Shape of the test specimen was A type with the width of 15 mm and the thickness of 2 mm. Distance between the holders was 136 mm and the tensile speed was 2 mm/min. The composite material was measured using Autograph AG-I manufactured by Shimadzu Corporation in conformity to JIS K 7113. Shape of the test specimen was No. 1 with the length of the test distance of 60 mm and the width of 10 mm. Distance between the holders was 115 mm and the tensile speed was 10 mm/min.

(7) Drop impact test of molded article

Measurement was performed using Dynatup Drop Weight Impact Tester 9250HV manufactured by Instron. Size of the test specimen was 150 mm × 100 mm. Weight of the dropweight was 5.43 kg. Load energy was 45 J.

(8) High speed punching test

The maximum load, absorbed energy and the maximum load point displacement were measured upon punching a test specimen in conformity to ISO 6603-2 Standard using Hydroshot HITS-P10 manufactured by Shimadzu Corporation. Size of the test specimen was 140 mm × 140 mm. Diameter of the striker was 10 mm. Opening diameter of the holder was 40 mm. The impact speed was 11 m/sec. Area of the displacement-load curve obtained by this test was evaluated as energy quantity absorbed by the test specimen.

(9) Compression test

Measurement was performed using a Tensilon Universal Tester manufactured by A&D Co., Ltd. in conformity to SACMA SRM1 Standard. Shape of the specimen was rectangle with the width of 15 mm and the length of 80 mm. Distance between the gauge lines was 4.8 mm. The compression speed was 1 mm/min.

[Material used]

(1) Polypropylene film

SunTox -CP Film, K Grade, thickness 30 $\mu$m, made by SunTox Co., Ltd.

(2) Polyamide 6 film

Emblem ON Film, Standard Grade, thickness 25 $\mu$m, made by UNITIKA Ltd.

(3) Polycarbonate film

Film was made using Panlite L-1225L made by Teijin Chemicals Ltd., thickness 100 $\mu$m.

(4) Polyethyleneterephthalate film

Teijin Tetoron Film, Standard S Grade, thickness 25 $\mu$m, made by Teijin DuPont Films Japan Ltd.

(5) Polyethylenenaphthalate film

Teijin Teonex Film, Standard Q51 Grade, thickness 25 $\mu$m, made by Teijin DuPont Films Japan Ltd.

(6) Polyethyleneterephthalate woven fabric

T-4498 Woven Fabric, made by Teijin Fibers Ltd., Original yarn: polyethyleneterephthalate fiber 1100 dtex, 192 f, twist count: 120 T/m (S direction), structure: plain weave, thickness: 0.4 mm, weight per unit area: 175 g/m$^2$.

(7) Polyethylenenaphthalate woven fabric

PF-1200 Woven Fabric, made by Teijin Fibers Ltd., Original yarn: polyethylenenaphthalate fiber 1100 dtex, 250 f (melting point lower than 280˚C), twist count: 30 T/m (S direction), structure: twill weave, thickness: 0.5 mm, weight per unit area: 310 g/m$^2$.

(8) Polyethyleneterephthalate knitted fabric

T-11588 Knitted Fabric, made by Teijin Fibers Ltd., Original yarn: polyethyleneterephthalate fiber 560 dtex 96 f, twist count: 60 T/m (S direction), structure: Raschel knit, thickness: 0.3 mm, weight per unit area: 120 g/m$^2$.

(9) Polyethyleneterephthalate twisted yarn cord

A polyethyleneterephthalate fiber P900M (1100 T, 250 f) made by Teijin Fibers Ltd. was used as the original yarn. The first twist of 275 T/m was applied in Z direction (twist constant 3.0) using a ring twister manufactured by Kaji Technology Corporation. The second twist of 200 T/m was then applied in S direction (twist constant 3.0) to the two first twisted yarns combined to make the twisted yarn cord for the experiment. Diameter of a twisted yarn cord was 0.5 mm. Besides this, twisted yarn cords with the first/second twist count of 7/10 (T/m), 710/1000 (T/m) and 965/2365 (T/m) were obtained by the similar method.

(10) Polyethylenenaphthalate twisted yarn cord A

A polyethylenenaphthalate fiber Q904M (1100 T, 250 f, melting point lower than 280˚C) made by Teijin Fibers Ltd. was used as the original yarn and subjected to a processing similar to the polyethyleneterephthalate yarn cord to obtain the twisted yarn cord with the first/second twist count of 200/275 (T/m).

(11) Polyethylenenaphthalate twisted yarn cord B

Polyethylenenaphthalate fiber (1100 dtex, 250f, melting point 285˚C or higher) spinned according to the method described in WO 2009/113555 was subjected to a processing similar to the polyethyleneterephthalate twisted yarn cord as the original yarn to obtain the twisted yarn cord with the first/second twist count of 200/275 (T/m).

(12) Nylon 66 twisted yarn cord

Nylon 66 fiber T5 (940 T, 140 f) made by Asahi Kasei Fibers Corporation was subjected to a processing similar to the polyethyleneterephthalate twisted yarn cord as the original yarn to obtain the twisted yarn cord with the first/second twist count of 210/300 (T/m).

(13) Polyethyleneterephthalate non-twisted yarn cord

Polyethyleneterephthalate fiber P900M (1100 T, 250f) made by Teijin Fibers Ltd. was used as the original yarn. Two yarns were combined without twisting to obtain the non-twisted yarn cord.

(14) Polyethyleneterephthalate staple

Polyethyleneterephthalate fiber P900M (1100 T, 250f) made by Teijin Fibers Ltd. was used as the original yarn. The yarns were cut into a length of 1 mm using a guillotine cutter.

(15) Carbon fiber original yarn

STS40 24K (fineness 16,000 dtex) and HTS40 12K (fineness 8,000 dtex) made by Toho Tenax Co., Ltd. were used. Specific modulus of elasticity was 12.2.

(16) Carbon fiber staple

Carbon fiber original yarn was cut into a length of 5 to 50 mm using a rotary cutter.

(17) Carbon fiber woven fabric

STS40 24K made by Toho Tenax Co., Ltd. was woven using a rapier loom. The structure was a plain weave and the weight per unit area was adjusted to 200 g/m$^2$.

(18) Glass fiber original yarn

RS240 QR-483, made by Nitto Boseki Co., Ltd. Specific modulus of elasticity was 4.2.

(19) Aramid fiber

Technora T-241J (1670T, 1000f), made by Teijin Techno Products Co., Ltd.
Upon the experiment, 10 original yarns were combined under alignment and used after adjusting the fineness to 16,700 dtex. Specific modulus of elasticity was 5.1.

[Example 1] Polyethylenenaphthalate woven fabric/polypropylene molded body

A polyethylenenaphthalate woven fabric and a polypropylene film were laminated in the order of 8 films/1 woven fabric/16 films/1 woven fabric/16 films/1 woven fabric/16 films/1 woven fabric/8 films. The polypropylene film was melted and polypropylene was impregnated between the fiber bundles of the polyethylenenaphthalate woven fabric by heating and pressurizing at the maximum temperature of 200˚C and the maximum pressure of 0.5 MPa for 10 minutes using a hot press MHPC manufactured by Meiki Co., Ltd. The laminate was then cooled under pressure to obtain the integrally molded body of polyethylenenaphthalate woven fabric/polypropylene. The thickness of the molded body was 1.6 mm and the volume fraction of the woven fabric was 35%. The degree of impregnation of polypropylene within the fiber bundle was 35% in the volume fraction. Specimens for tensile strength test were cut out from the molded body obtained based on the warp direction of the woven fabric and evaluated. Specimens for drop impact test and high speed punching test were also cut out and evaluated. The evaluation results are shown in Table 1.

[Example 2] Polyethyleneterephthalate woven fabric/polypropylene molded body

A polyethyleneterephthalate woven fabric and a polypropylene film were treated similarly to Example 1 except that they were laminated in the order of 4 films/1 woven fabric/8 films/1 woven fabric/8 films/1 woven fabric/8 films/1 woven fabric/4 films to obtain the integrally molded body of polyethyleneterephthalate woven fabric/polypropylene. The thickness of the molded body was 1.4 mm and the volume fraction of the woven fabric was 37%. The degree of impregnation of polypropylene within the fiber bundle was 30% in the volume fraction. The evaluation results are shown in Table 1.

[Example 3] Polyethyleneterephthalate woven fabric/polypropylene molded body

Treatment was performed similarly to Example 2 except that the molding conditions were 210˚C and 2.0 MPa to obtain the integrally molded body of polyethyleneterephthalate woven fabric/polypropylene. The thickness of the molded body was 1.3 mm and the volume fraction of the woven fabric was 37%. The degree of impregnation of polypropylene within the fiber bundle was 95% in volume fraction. The evaluation results are shown in Table 1.

[Example 4] Polyethyleneterephthalate knitted fabric/polypropylene molded body

A polyethyleneterephthalate knitted fabric and a polypropylene film were treated similarly to Example 1 except that they were laminated in the order of 3 films/1 knitted fabric/6 films/1 knitted fabric/6 films/1 knitted fabric/6 films/1 knitted fabric/3 films to obtain the integrally molded body of polyethyleneterephthalate knitted fabric/polypropylene. The thickness of the molded body was 0.9 mm and the volume fraction of the knitted fabric was 34%. The degree of impregnation of polypropylene within the fiber was 28% in the volume fraction. The evaluation results are shown in Table 1.

[Example 5] Polyethyleneterephthalate twisted yarn cord/polypropylene molded body

After adhering 6 polypropylene films on a flat plate made of aluminum, polyethyleneterephthalate twisted yarn cord with the first/second twist count of 200/275 (T/m) was wound on this plate in a pitch of 1 mm under a tension of 100 g. Then, after adhering 6 films on this twisted yarn cord, the polypropylene film was melted and polypropylene was impregnated between the cords of the polyethyleneterephthalate twisted yarn cord by heating and pressurizing at the maximum temperature of 200˚C and the maximum pressure of 0.5 MPa for 10 minutes using a hot press MHPC manufactured by Meiki Co., Ltd. The sample was then cooled under pressure to obtain the integrally molded body of polyethyleneterephthalate twisted yarn cord/polypropylene. The thickness of the molded body was 0.4 mm and the volume fraction of the twisted yarn cord was 33%. The degree of impregnation of polypropylene within the fiber was 15% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethyleneterephthalate twisted yarn cord/polypropylene. The thickness of the molded body was 1.2 mm and the volume fraction of the twisted yarn cord was 33%. Specimens for drop impact test and high speed punching test were cut out from this 3 ply molded body and evaluated. The evaluation results are shown in Table 1.

[Example 6] Polyethyleneterephthalate twisted yarn cord/polypropylene molded body

Treatment similar to Example 5 was performed except that the molding conditions were 210˚C and 2.0 MPa to obtain the integrally molded body of polyethyleneterephthalate twisted yarn cord/polypropylene. The thickness of the molded body was 0.4 mm and the volume fraction of the twisted yarn cord was 33%. The degree of impregnation of polypropylene within the fiber was 70% in the volume fraction. The evaluation results are shown in Table 1.

[Comparative Example 1] Polyethyleneterephthalate staple/polypropylene molded body

Polyethyleneterephthalate staples with a cut length of 1 mm and a polypropylene resin were kneaded at 210˚C for 1 minute using a single axle extruder TP15 manufactured by TPIC Co., Ltd. to obtain the strand of the composite material composed of polyethyleneterephthalate staples and polypropylene. Then, test specimens for the tensile strength test, drop impact test and high speed punching test were made from the strand obtained using a small size injection molding machine EP5 manufactured by Nissei Plastic Industrial Co., Ltd. at 210˚C. The volume fraction of the fiber in the test specimen was 34%. Results of the laser microscopic observation of the cross section of the test specimen showed that the staples were well dispersed in the resin to the extent of being split to the level of single yarns and aggregates of the single yarns were not observed. (The degree of impregnation of polypropylene was 100 % in the volume fraction.) The evaluation results are shown in Table 1.

[Comparative Example 2] Polypropylene molded body

Forty polypropylene films were laminated and melted by heating and pressurizing at the maximum temperature of 200˚C and the maximum pressure of 1.0 MPa for 10 minutes using a hot press MHPC manufactured by Meiki Co., Ltd. The laminate was then cooled under pressure to obtain the polypropylene molded body. The thickness of the molded body was 1.2 mm. The evaluation results are shown in Table 1.

[Comparative Example 3] Polycarbonate molded body

Twelve polycarbonate films were laminated, softened and melted by heating and pressurizing at the maximum temperature of 250˚C and the maximum pressure of 2.0 MPa for 10 minutes using a hot press MHPC manufactured by Meiki Co., Ltd. The laminate was then cooled under pressure to obtain the polycarbonate molded body. The thickness of the molded body was 1.2 mm. The evaluation results are shown in Table 2.

[Example 7] Polyethyleneterephthalate twisted yarn cord/polyamide 6 molded body

After adhering 7 polyamide 6 films on a flat plate made of aluminum, polyethyleneterephthalate twisted yarn cord with the first/second twist count of 200/275 (T/m) was wound on this plate in a pitch of 1 mm under a tension of 100 g. Then, after adhering 7 films on this twisted yarn cord, the polyamide 6 film was melted and polyamide 6 was impregnated between the cords of the polyethyleneterephthalate twisted yarn cord by heating and pressurizing at the maximum temperature of 240˚C and the maximum pressure of 0.5 MPa for 10 minutes using a hot press MHPC manufactured by Meiki Co., Ltd. The sample was then cooled under pressure to obtain the integrally molded body of polyethyleneterephthalate twisted yarn cord/polyamide 6. The thickness of the molded body was 0.4 mm and the volume fraction of the twisted yarn cord was 35%. The degree of impregnation of polyamide 6 within the fiber was 20% in volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethyleneterephthalate twisted yarn cord/polyamide 6. The thickness of the molded body was 1.2 mm and the volume fraction of the twisted yarn cord was 35%. Specimens for drop impact test and high speed punching test were cut out from this 3 ply molded body and evaluated. The evaluation results are shown in Table 2.

[Example 8] Polyethyleneterephthalate twisted yarn cord/polycarbonate molded body

After adhering 2 polycarbonate films on a flat plate made of aluminum, polyethyleneterephthalate twisted yarn cord with the first/second twist count of 200/275 (T/m) was wound on this plate in a pitch of about 1 mm under a constant tension. Then, after adhering 2 films on this twisted yarn cord, the polycarbonate film was softened and melted and polycarbonate was impregnated between the cords of the polyethyleneterephthalate twisted yarn cord by heating and pressurizing at the maximum temperature of 250˚C and the maximum pressure of 2.0 MPa for 10 minutes using a hot press MHPC manufactured by Meiki Co., Ltd. The sample was then cooled under pressure to obtain the integrally molded body of polyethyleneterephthalate twisted yarn cord/polycarbonate. The thickness of the molded body was 0.4 mm and the volume fraction of the twisted yarn cord was 30%. The degree of impregnation of polycarbonate within the fiber was 10% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethyleneterephthalate twisted yarn cord/polycarbonate. The thickness of the molded body was 1.3 mm and the volume fraction of the twisted yarn cord was 30%. Specimens for drop impact test and high speed punching test were cut out from this 3 ply molded body and evaluated. The evaluation results are shown in Table 2.

[Example 9] Polyethylenenaphthalate woven fabric/polyethyleneterephthalate molded body

A polyethylenenaphthalate woven fabric and a polyethyleneterephthalate film were laminated in the order of 10 films/1 woven fabric/19 films/1 woven fabric/19 films/1 woven fabric/19 films/1 woven fabric/10 films. The polyethyleneterephthalate film was melted and polyethyleneterephthalate was impregnated between the fiber bundles of the polyethylenenaphthalate woven fabric by heating and pressurizing at the maximum temperature of 270˚C and the maximum pressure of 2.0 MPa for 10 minutes using a hot press MHPC manufactured by Meiki Co., Ltd. The laminate was then cooled under pressure to obtain the integrally molded body of polyethylenenaphthalate woven fabric/polyethyleneterephthalate. The thickness of the molded body was 1.6 mm and the volume fraction of the woven fabric was 35%. The degree of impregnation of polyethyleneterephthalate within the fiber was 23% in the volume fraction. The evaluation results are shown in Table 2.

[Comparative Example 4] Polyamide 6 molded body

Fifty polyamide 6 films were laminated and melted by heating and pressurizing at the maximum temperature of 240˚C and the maximum pressure of 2.0 MPa for 10 minutes using a hot press MHPC manufactured by Meiki Co., Ltd. The laminate was then cooled under pressure to obtain the polyamide 6 molded body. The thickness of the molded body was 1.2 mm. The evaluation results are shown in Table 2.

[Comparative Example 5] Polyethyleneterephthalate molded body

Fifty polyethyleneterephthalate films were laminated and melted by heating and pressurizing at the maximum temperature of 270˚C and the maximum pressure of 2.0 MPa for 10 minutes using a hot press MHPC manufactured by Meiki Co., Ltd. The laminate was then cooled under pressure to obtain the polyethyleneterephthalate molded body. The thickness of the molded body was 1.2 mm. The evaluation results are shown in Table 2.

[Examples 10 to 28]

Various polypropylene-based composite materials were prepared and evaluated by changing the type, form, twist count, etc. of the fiber to those shown in Table 3 or 4 and pressing them under the molding conditions shown in Examples 1 to 6. The evaluation results are shown in Table 3 and Table 4.

[Example 29] Polyethyleneterephthalate twisted yarn cord/polyamide 6 molded body

After adhering 3 polyamide 6 films on a flat plate made of aluminum, polyethyleneterephthalate twisted yarn cord with the first/second twist count of 200/275 (T/m) was wound on this plate in a pitch of 2 mm under a tension of 100 g. Then, after adhering 4 films on this twisted yarn cord, the polyamide 6 film was melted and polyamide 6 was impregnated between the cords of the polyethyleneterephthalate twisted yarn cord by heating and pressurizing at the maximum temperature of 240˚C and the maximum pressure of 2.0 MPa for 10 minutes using a hot press MHPC manufactured by Meiki Co., Ltd. The sample was then cooled under pressure to obtain the integrally molded body of polyethyleneterephthalate twisted yarn cord/polyamide 6. The thickness of the molded body was 0.3 mm and the volume fraction of the twisted yarn cord was 35%. The degree of impregnation of polyamide 6 within the fiber was 56% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethyleneterephthalate twisted yarn cord/polyamide 6. The thickness of the molded body was 0.9 mm and the volume fraction of the twisted yarn cord was 35%. Specimens for drop impact test and high speed punching test were cut out from this 3 ply molded body and evaluated. The evaluation results are shown in Table 4.

[Examples 30 to 40]

Various nylon 6-based composite materials were prepared and evaluated by changing the type, form, twist count, etc. of the fiber to those shown in Table 5 or 6 and pressing them under the molding conditions shown in Examples 7 or 29. The evaluation results are shown in Table 5 and Table 6.

[Example 41] Polyethyleneterephthalate twisted yarn cord/polycarbonate molded body

After adhering 1 polypropylene film on a flat plate made of aluminum, polyethyleneterephthalate twisted yarn cord with the first/second twist count of 200/275 (T/m) was wound on this plate in a pitch of about 2 mm under a constant tension. Then, after adhering 1 film on this twisted yarn cord, the polycarbonate film was softened and melted and polycarbonate was impregnated between the cords of the polyethyleneterephthalate twisted yarn cord by heating and pressurizing at the maximum temperature of 250°C and the maximum pressure of 5.0 MPa for 10 minutes using a hot press MHPC manufactured by Meiki Co., Ltd. The sample was then cooled under pressure to obtain the integrally molded body of polyethyleneterephthalate twisted yarn cord/polycarbonate. The thickness of the molded body was 0.3 mm and the volume fraction of the twisted yarn cord was 29%. The degree of impregnation of polycarbonate within the fiber was 48% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethyleneterephthalate twisted yarn cord/polycarbonate. The thickness of the molded body was 0.9 mm and the volume fraction of the twisted yarn cord was 29%. Specimens for drop impact test and high speed punching test were cut out from this 3 ply molded body and evaluated. The evaluation results are shown in Table 6.

[Examples 42 to 48]

Various polycarbonate-based composite materials were prepared and evaluated by changing the type, form, twist count, etc. of the fiber to those shown in Table 6 and pressing them under the molding conditions shown in Examples 8 or 41. The evaluation results are shown in Table 6.

[Example 49] Polyethylenenaphthalate twisted yarn cord A/polyethyleneterephthalate molded body

After adhering 3 polyethyleneterephthalate films on a flat plate made of aluminum, polyethylenenaphthalate twisted yarn cord A with the first/second twist count of 200/275 (T/m) was wound on this plate in a pitch of 1 mm under a tension of 100 g. Then, after adhering 4 films on this twisted yarn cord, the polyethyleneterephthalate film was melted and polyethyleneterephalate was impregnated between the fiber bundles of the polyethylenenaphthalate twisted yarn cord A by heating and pressurizing at the maximum temperature of 270°C and the maximum pressure of 3.0 MPa for 10 minutes using a hot press MHPC manufactured by Meiki Co., Ltd. The sample was then cooled under pressure to obtain the integrally molded body of polyethylenenaphthalate twisted yarn cord A/polyethyleneterephthalate. The thickness of the molded body was 0.3 mm and the volume fraction of the twisted yarn cord was 49%. The degree of impregnation of polyethyleneterephthalate within the fiber was 57% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethylenenaphthalate twisted yarn cord A/polyethyleneterephthalate. The thickness of the molded body was 1.0 mm and the volume fraction of the twisted yarn cord was 49%. Specimens for drop impact test and high speed punching test were cut out from this 3 ply molded body and evaluated. The evaluation results are shown in Table 6.

[Example 50] Polyethylenenaphthalate woven fabric/polyethyleneterephthalate molded body

A polyethylenenaphthalate woven fabric and a polyethyleneterephthalate film were laminated in the order of 5 films/1 woven fabric/10 films/1 woven fabric/10 films/1 woven fabric/10 films/1 woven fabric/5 films. The polyethyleneterephthalate film was melted and polyethyleneterephthalate was impregnated between the fiber bundles of the polyethylenenaphthalate woven fabric by heating and pressurizing at the maximum temperature of 270°C and the maximum pressure of 3.0 MPa for 10 minutes using a hot press MHPC manufactured by Meiki Co., Ltd. The laminate was then cooled under pressure to obtain the integrally molded body of polyethylenenaphthalate woven fabric/polyethyleneterephthalate. The thickness of the molded body was 1.6 mm and the volume fraction of the woven fabric was 50%. The degree of impregnation of polyethyleneterephthalate within the fiber was 55% in the volume fraction. Specimens for tensile strength test were cut out from the molded body obtained based on the warp direction of the woven fabric and evaluated. Specimens for drop impact test and high speed punching test were also cut out and evaluated. The evaluation results are shown in Table 7.

[Example 51] Polyethylenenaphthalate twisted yarn cord B/polyethylenenaphthalate molded body

After adhering 3 polyethylenenaphthalate films on a flat plate made of aluminum, polyethylenenaphthalate twisted yarn cord B with the first/second twist count of 200/275 (T/m) was wound on this plate in a pitch of 1 mm under a tension of 100 g. Then, after adhering 4 films on this twisted yarn cord, the polyethylenenaphthalate film was melted and polyethylenenaphalate was impregnated between the fiber bundles of the polyethylenenaphthalate twisted yarn cord B by heating and pressurizing at the maximum temperature of 280˚C and the maximum pressure of 3.0 MPa for 10 minutes using a hot press MHPC manufactured by Meiki Co., Ltd. The sample was then cooled under pressure to obtain the integrally molded body of polyethylenenaphthalate twisted yarn cord B/polyethylenenaphthalate. The thickness of the molded body was 0.3 mm and the volume fraction of the twisted yarn cord was 49%. The degree of impregnation of polyethyleneterephthalate within the fiber was 59% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethylenenaphthalate twisted yarn cord/polyethyleneterephthalate. The thickness of the molded body was 1.0 mm and the volume fraction of the twisted yarn cord was 49%. Specimens for drop impact test and high speed punching test were cut out from this 3 ply molded body and evaluated. The evaluation results are shown in Table 7.

[Comparative Example 6] Polyethyleneterephthalate non-twisted yarn cord/polypropylene molded body

After adhering 3 polypropylene films on a flat plate made of aluminum, polyethyleneterephthalate non-twisted yarn cord was wound on this plate under a tension of 100 g in a pitch of 1 mm. Then, after adhering 3 films on this non-twisted yarn cord, the polypropylene film was melted and polypropylene was impregnated within the polyethyleneterephthalate non-twisted yarn cord by heating and pressurizing at the maximum temperature of 210˚C and the maximum pressure of 2.0 MPa for 10 minutes using a hot press MHPC manufactured by Meiki Co., Ltd. The sample was then cooled under pressure to obtain the integrally molded body of polyethyleneterephthalate non-twisted yarn cord/polypropylene. The thickness of the molded body was 0.3 mm and the volume fraction of the non-twisted yarn cord was 50%. The degree of impregnation of polypropylene within the fiber was 98% in the volume fraction. Specimens for tensile strength test were cut out from the molded body obtained based on the non-twisted yarn cord direction and evaluated. In addition, the molded body was heated and pressurized again after laminating in the directions of 0˚, 90˚ and 0˚ of the non-twisted yarn cord and cooled under pressure to obtain the 3 ply molded body of polyethyleneterephthalate non-twisted yarn cord/polypropylene. The thickness of the molded body was 1.0 mm and the volume fraction of the non-twisted yarn cord was 50%. The evaluation results are shown in Table 7.

[Comparative Example 7] Polyethyleneterephthalate twisted yarn cord/polypropylene molded body

After adhering 3 polypropylene films on a flat plate made of aluminum, polyethyleneterephthalate twisted yarn cord with the first/second twist count of 965/1365 (T/m) was wound on this plate in a pitch of 1 mm under a tension of 100 g. Then, after adhering 3 films on this twisted yarn cord, the polypropylene film was melted and polypropylene was impregnated within the polyethyleneterephthalate twisted yarn cord by heating and pressurizing at the maximum temperature of 210˚C and the maximum pressure of 0.5 MPa for 10 minutes using a hot press MHPC manufactured by Meiki Co., Ltd. The sample was then cooled under pressure to obtain the integrally molded body of polyethyleneterephthalate twisted yarn cord/polypropylene. The thickness of the molded body was 0.4 mm and the volume fraction of the twisted yarn cord was 49%. The degree of impregnation of polypropylene within the fiber was 10% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethyleneterephthalate twisted yarn cord A/polypropylene. The thickness of the molded body was 1.1 mm and the volume fraction of the twisted yarn cord was 49%. The evaluation results are shown in Table 7.

[Comparative Example 8] Polyethyleneterephthalate twisted yarn cord/polypropylene molded body

After adhering 6 polypropylene films on a flat plate made of aluminum, polyethyleneterephthalate twisted yarn cord with the first/second twist count of 200/275 (T/m) was wound on this plate in a pitch of 10 mm under a tension of 100 g. Then, after adhering 6 films on this twisted yarn cord, the polypropylene film was melted and polypropylene was impregnated within the polyethyleneterephthalate twisted yarn cord by heating and pressurizing at the maximum temperature of 210˚C and the maximum pressure of 2.0 MPa for 10 minutes using a hot press MHPC manufactured by Meiki Co., Ltd. The sample was then cooled under pressure to obtain the integrally molded body of polyethyleneterephthalate twisted yarn cord/polypropylene. The thickness of the molded body was 0.4 mm and the volume fraction of the twisted yarn cord was 5%. The degree of impregnation of polypropylene within the fiber was 60% in the volume fraction. Specimens for tensile strength test were cut out from the molded body obtained based on the twisted yarn cord direction and evaluated. In addition, the molded body was heated and pressurized again after laminating in the directions of 0˚, 90˚ and 0˚ of the twisted yarn cord and cooled under pressure to obtain the 3 ply molded body of polyethyleneterephthalate twisted yarn cord/polypropylene. The thickness of the molded body was 1.2 mm and the volume fraction of the twisted yarn cord was 5%. The evaluation results are shown in Table 7.

[Comparative Example 9] Polyethylenenaphthalate molded body

Fifty polyethylenenaphthalate films were laminated and melted by heating and pressurizing at the maximum temperature of 280˚C and the maximum pressure of 2.0 MPa for 10 minutes using a hot press MHPC manufactured by Meiki Co., Ltd. The laminate was then cooled under pressure to obtain the polyethylenenaphthalate molded body. The thickness of the molded body was 1.2 mm. The evaluation results are shown in Table 7.

[Example 52] Preparation of polyethyleneterephthalate twisted yarn cord/polyamide 6 resin composite material

On an aluminum plate of a size of 40 cm × 30 cm with 6 polyamide 6 films adhered on one side was wound a polyethyleneterephthalate twisted yarn cord with a homogeneous thickness so as to have a weight per unit area of 200 g/m$^2$. By heating and pressurizing this aluminum plate at the maximum temperature of 240˚C and the maximum pressure of 0.5 MPa for 10 minutes using a hot press MHPC manufactured by Meiki Co., Ltd., uni-directional material of polyethyleneterephthalate twisted yarn cord partially impregnated with polyamide 6 resin was obtained. The degree of resin impregnation was 30%, thickness was 0.3 mm, and volume fraction of the fiber was 40%. Specimens for tensile strength test were cut out from the uni-directional material obtained based on the fiber direction and evaluated. In addition, the uni-directional material was heated and pressurized again using a mold of 30 cm × 20 cm after laminating in the directions of 0˚, 90˚ and 0˚ based on the fiber direction of the uni-directional material and cutting out to a suitable size to obtain the composite material. The thickness was 1.0 mm. Specimens for drop impact test were cut out from this composite material and evaluated. The evaluation results are shown in Table 8.

[Example 53] Preparation of polyethyleneterephthalate twisted yarn cord/polyamide 6 resin composite material

Treatment was performed similarly to Example 52 except that the maximum pressure at press molding was 2.0 MPa to obtain the composite material containing the uni-directional material of polyethyleneterephthalate twisted yarn cord with degree of resin impregnation of 95%, thickness of 0.3 mm, and volume fraction of the fiber of 40%. The evaluation results are shown in Table 8.

[Example 54] Preparation of polyethyleneterephthalate woven fabric/polyamide 6 resin composite material

On an aluminum plate of a size of 40 cm × 30 cm with 6 polyamide 6 films adhered on one side was adhered a polyethyleneterephthalate woven fabric with a weight per unit area of 200 g/m$^2$. By heating and pressurizing this aluminum plate at the maximum temperature of 240˚C and the maximum pressure of 0.5 MPa for 10 minutes using a hot press MHPC manufactured by Meiki Co., Ltd., bi-directional material of polyethyleneterephthalate woven fabric partially impregnated with polyamide 6 resin was obtained. The degree of resin impregnation was 30%, thickness was 0.3 mm, and volume fraction of the fiber was 40%. Specimens for tensile strength test were cut out from the bi-directional material obtained based on the warp direction and evaluated. In addition, the bi-directional material was heated and pressurized again using a mold of 30 cm × 20 cm after laminating three sheets of the material with the same fiber axis and cutting out to a suitable size to obtain the composite material. The thickness was 1.0 mm. Specimens for drop impact test were cut out from this composite material and evaluated. The evaluation results are shown in Table 8.

[Example 55] Preparation of polyethyleneterephthalate knitted fabric/polyamide 6 resin composite material

Treatment was performed similarly to Example 54 except that the woven fabric was changed to knitted fabric to obtain the composite material containing the bi-directional material of polyethyleneterephthalate knitted fabric with the degree of resin impregnation of 30%, thickness of 0.3 mm, and volume fraction of the fiber of 40%. The evaluation results are shown in Table 8.

[Example 56] Preparation of polyethyleneterephthalate twisted yarn cord/polypropylene resin composite material

On an aluminum plate of a size of 40 cm × 30 cm with 5 polypropylene films adhered on one side was wound a polyethyleneterephthalate twisted yarn cord with a homogeneous thickness so as to have a weight per unit area of 200 g/m$^2$. By heating and pressurizing this aluminum plate at the maximum temperature of 200˚C and the maximum pressure of 0.5 MPa for 10 minutes using a hot press MHPC manufactured by Meiki Co., Ltd., uni-directional material of polyethyleneterephthalate twisted yarn cord partially impregnated with polypropylene resin was obtained. The degree of resin impregnation was 30%, thickness was 0.3 mm, and volume fraction of the fiber was 40%. Specimens for tensile strength test were cut out from the uni-directional material obtained based on the fiber direction and evaluated. In addition, the uni-directional material was heated and pressurized again using a mold of 30 cm × 20 cm after laminating in the directions of 0˚, 90˚ and 0˚ based on the fiber direction of the uni-directional material and cutting out to a suitable size to obtain the composite material. The thickness was 1.0 mm. Specimens for drop impact test were cut out from this composite material and evaluated. The evaluation results are shown in Table 8.

As described above, the molded bodies prepared in Examples 1 to 56 exhibited the excellent strength and impact resistance (energy absorption property) compared with the molded bodies of Comparative Examples 1 to 9. Especially, the molded bodies of Examples 1 to 56 of the present invention have better properties than the polycarbonate resin of Comparative Example 3, which is said to have the highest impact resistance among the thermoplastic resins. It is obvious that this is the effect of the organic filament used as the reinforcement material. In addition, impact resistance was further enhanced by adjusting the molding conditions so that the thermoplastic resin is substantially impregnated between the organic filament bundles and that the degree of impregnation of the thermoplastic resin within the fiber bundle is controlled.

[Reference Example 1] Preparation of carbon fiber filament/polyamide 6 resin high stiffness material

On an aluminum plate of a size of 40 cm × 30 cm with 5 polyamide 6 films adhered on one side was wound carbon fiber with a homogeneous thickness so as to have a weight per unit area of 200 g/m$^2$. By heating and pressurizing this aluminum plate at the maximum temperature of 260˚C and the maximum pressure of 2.0 MPa for 10 minutes using a hot press MHPC manufactured by Meiki Co., Ltd., uni-directional material of carbon fiber partially impregnated with polyamide 6 resin was obtained. The partially impregnated uni-directional material was then heated and pressurized at the maximum temperature of 260˚C and the maximum pressure of 3.0 MPa for 20 minutes using a mold of 30 cm × 20 cm after laminating 3 sheets of the material in the same fiber direction and cutting out to a suitable size to obtain the high stiffness material with the carbon fiber aligned in one direction. The degree of resin impregnation was 99%, thickness was 0.5 mm, and the volume fraction of the fiber was 50%. Tensile and compression tests of the fiber direction (0˚ direction) were performed using this molded body. In addition, the partially impregnated one-directional material was heated and pressurized again after laminating in the directions of 0˚, 90˚ and 0˚ to obtain a high stiffness material of 0˚/ 90˚ laminate. Thickness of the molded body was 0.5 mm and the volume fraction of the fiber was 50%. Specimens for drop impact test and high speed punching test were cut out from this 0˚/90˚ laminate and evaluated. The evaluation results are shown in Table 9.

[Reference Example 2] Preparation of carbon fiber filament/polyamide 6 resin high stiffness material

Treatment was performed similarly to Reference Example 1 except that the number of the polyamide 6 films in the partial impregnation was 7 to obtain the high stiffness material of the carbon fiber aligned in one direction with the degree of resin impregnation of 99%, thickness of 0.5 mm and volume fraction of the fiber of 40% and the high stiffness material with 0˚/90˚ laminated. The evaluation results are shown in Table 9.

[Reference Example 3] Preparation of carbon fiber filament/polyamide 6 resin high stiffness material

Treatment was performed similarly to Reference Example 1 except that the maximum pressure in the press molding using a mold of 30 cm x 20 cm was 2.5 MPa to obtain the high stiffness material of the carbon fiber aligned in one direction with the degree of resin impregnation of 92%, thickness of 0.5 mm and the volume fraction of the fiber of 50% and the high stiffness material with 0˚/90˚ laminate. The evaluation results are shown in Table 9.

[Reference Example 4] Preparation of carbon fiber staple/polyamide 6 resin high stiffness material

Twenty-four g of carbon staple with a cut length of 10 mm was dispersed on an aluminum plate of 40 cm x 30 cm so that a homogeneous thickness was obtained. Five polyamide 6 films were placed on this plate and heated and pressurized at the maximum temperature of 260˚C and the maximum pressure of 2.0 MPa for 10 minutes using a hot press MHPC manufactured by Meiki Co., Ltd. to obtain a isotropic carbon fiber material partially impregnated with polyamide 6 resin. The partially impregnated isotropic material was then heated and pressurized at the maximum temperature of 260˚C and the maximum pressure of 3.0 MPa for 20 minutes using a mold of 30 cm x 20 cm after laminating 3 sheets of the material and cutting out to a suitable size to obtain the isotropic carbon fiber material with the degree of resin impregnation as high as 99%. Thickness of the high stiffness material with the isotropic carbon fiber was 0.5 mm and the volume fraction of the fiber was 50%. The evaluation results are shown in Table 9.

[Reference Example 5] Preparation of carbon fiber woven fabric/polyamide 6 resin high stiffness material

To an aluminum plate of a size of 40 cm x 30 cm with 5 polyamide 6 films adhered on one side was adhered a carbon fiber woven fabric with the weight of 200 g/m$^2$. By heating and pressurizing this aluminum plate at the maximum temperature of 260˚C and the maximum pressure of 2.0 MPa for 10 minutes using a hot press MHPC manufactured by Meiki Co., Ltd., bi-directional material of carbon fiber partially impregnated with polyamide 6 resin was obtained. The partially impregnated bi-directional material was then heated and pressurized at the maximum temperature of 260˚C and the maximum pressure of 3.0 MPa for 20 minutes using a mold of 30 cm x 20 cm after laminating 3 sheets of the material with the matched fiber axis and cutting out to a suitable size to obtain the high stiffness material with the carbon fiber aligned in two directions with the degree of resin impregnation as high as 99%. Thickness was 0.5 mm and the volume fraction of the fiber was 50%. The evaluation results are shown in Table 9.

[Reference Example 6] Preparation of carbon fiber filament/polypropylene resin high stiffness material

On an aluminum plate of a size of 40 cm x 30 cm with 4 polypropylene films adhered on one side was wound carbon fiber with a homogeneous thickness so as to have a weight per unit area of 200 g/m$^2$. By heating and pressurizing this aluminum plate at the maximum temperature of 220˚C and the maximum pressure of 2.0 MPa for 10 minutes using a hot press MHPC manufactured by Meiki Co., Ltd., uni-directional material of carbon fiber partially impregnated with polypropylene resin was obtained. The partially impregnated uni-directional material was then heated and pressurized at the maximum temperature of 220˚C and the maximum pressure of 3.0 MPa for 20 minutes using a mold of 30 cm x 20 cm after laminating 3 sheets of the material with the same fiber direction and cutting out to a suitable size to obtain the high stiffness material with the carbon fiber aligned in one direction having the degree of resin impregnation as high as 99%. Thickness was 0.5 mm and the volume fraction of the fiber was 50%. Tensile and compression tests of the fiber direction (0˚ direction) were performed using this molded body. In addition, the partially impregnated uni-directional material was heated and pressurized again after laminating in the directions of 0˚, 90˚ and 0˚ to obtain a high stiffness material of 0˚/90˚ laminate. Thickness of the molded body was 0.5 mm and the volume fraction of the fiber was 50%. Specimens for drop impact test and high speed punching test were cut out from this 0˚/90˚ laminate and evaluated. The evaluation results are shown in Table 9.

[Reference Example 7] Preparation of glass fiber filament/polyamide 6 resin high stiffness material

Treatment was performed similarly to Reference Example 1 except that the carbon fiber was changed to glass fiber to obtain the high stiffness material of the glass fiber aligned in one direction with the degree of resin impregnation of 99%, thickness of 0.5 mm and the volume fraction of the fiber of 50% and the high stiffness material with 0˚/90˚ laminate. The evaluation results are shown in Table 9.

[Reference Example 8] Preparation of aramid fiber filament/polyamide 6 resin high stiffness material

Treatment was performed similarly to Reference Example 1 except that the carbon fiber was changed to aramid fiber to obtain the high stiffness material of the aramid fiber aligned in one direction with the degree of resin impregnation of 99%, thickness of 0.5 mm and the volume fraction of the fiber of 50% and the high stiffness material with 0˚/90˚ laminate. The evaluation results are shown in Table 9.

[Reference Example 9] Preparation of carbon fiber filament/polypropylene resin high stiffness material

Treatment was performed similarly to Reference Example 6 except that the number of the polypropylene films for preparation of uni-directional material was 9 and that the number of laminate for preparation of the high stiffness material was 9 to obtain the high stiffness material of the carbon fiber aligned in one direction with the degree of resin impregnation of 99%, thickness of 1.5 mm and the volume fraction of the fiber of 31% and the high stiffness material with 0˚/90˚ laminate. The evaluation results are shown in Table 10.

[Reference Example 10] Preparation of carbon fiber filament/polypropylene resin high stiffness material

Treatment was performed similarly to Reference Example 6 except that the number of the polypropylene films for preparation of uni-directional material was 9 and that the number of laminate for preparation of the high stiffness material was 9 and that the press molding pressure was 2 MPa to obtain the high stiffness material of the carbon fiber aligned in one direction with the degree of resin impregnation of 91%, thickness of 1.5 mm and the volume fraction of the fiber of 31% and the high stiffness material with 0˚/90˚ laminate. The evaluation results are shown in Table 10.

[Reference Example 11 to 13] Preparation of carbon fiber filament/polypropylene resin high stiffness material

Treatment was performed similarly to Reference Example 6 by changing the number of the polypropylene films used and the number of laminate for preparation of the high stiffness material to obtain the high stiffness material of various carbon fibers aligned in one direction and the high stiffness material with 0˚/90˚ laminate. The evaluation results are shown in Table 10.

[Reference Example 14] Preparation of carbon fiber staple/polypropylene resin high stiffness material

Twenty-four g of carbon staple with a cut length of 20 mm was dispersed on an aluminum plate of 40 cm x 30 cm so that a homogeneous thickness was obtained. Six polypropylene films were placed on this plate and heated and pressurized at the maximum temperature of 220˚C and the maximum pressure of 2.0 MPa for 10 minutes using a hot press MHPC manufactured by Meiki Co., Ltd. to obtain a isotropic carbon fiber material partially impregnated with polypropylene resin. The partially impregnated isotropic material was then heated and pressurized at the maximum temperature of 220˚C and the maximum pressure of 3.0 MPa for 20 minutes using a mold of 30 cm x 20 cm after laminating 9 sheets of the material and cutting out to a suitable size to obtain the isotropic carbon fiber material with the degree of resin impregnation as high as 99%. Thickness of the high stiffness material with the isotropic carbon fiber was 1.5 mm and the volume fraction of the fiber was 40%. The evaluation results are shown in Table 10.

[Reference Example 15 to 19] Preparation of carbon fiber staple/polypropylene resin high stiffness material

Treatment was performed similarly to Reference Example 14 by changing the fineness and weight of the carbon fiber used, number of the polypropylene films and the number of laminate and press molding pressure for preparation of the high stiffness material to obtain the high stiffness material of various isotropic carbon fibers. The evaluation results are shown in Tables 10 and 11.

[Reference Example 20] Preparation of carbon fiber staple/polypropylene resin high stiffness material

Treatment was performed similarly to Reference Example 14 with the cut length of the carbon fiber staple of 50 mm and the number of polypropylene films for preparation of the partially impregnated isotropic material of 9 to obtain the high stiffness material of isotropic carbon fiber with the degree of resin impregnation of 99%, thickness of 1.5 mm and the volume fraction of the fiber of 30%. The evaluation results are shown in Table 11.

[Reference Example 21] Preparation of carbon fiber staple/polypropylene resin high stiffness material

Treatment was performed similarly to Reference Example 14 with the cut length of the carbon fiber staple of 5 mm and the number of polypropylene films for preparation of the partially impregnated isotropic material of 9 to obtain the high stiffness material of isotropic carbon fiber with the degree of resin impregnation of 99%, thickness of 1.5 mm and the volume fraction of the fiber of 30%. The evaluation results are shown in Table 11.

[Reference Example 22] Preparation of glass fiber filament/polypropylene resin high stiffness material

Treatment was performed similarly to Reference Example 6 by changing the carbon fiber to glass fiber and with the number of polypropylene films of 9 and the number of laminate for preparation of the high stiffness material of 9 to obtain the high stiffness material of the glass fiber aligned in one direction with the degree of resin impregnation of 99%, thickness of 1.5 mm and the volume fraction of the fiber of 30% and the high stiffness material with 0˚/90˚ laminate. The evaluation results are shown in Table 11.

[Reference Example 23] Preparation of aramid fiber filament/polypropylene resin high stiffness material

Treatment was performed similarly to Reference Example 6 by changing the carbon fiber to aramid fiber and with the number of polypropylene films of 9 and the number of laminate for preparation of the high stiffness material of 9 to obtain the high stiffness material of the aramid fiber aligned in one direction with the degree of resin impregnation of 99%, thickness of 1.5 mm and the volume fraction of the fiber of 30% and the high stiffness material with 0˚/90˚ laminate. The evaluation results are shown in Table 11.

[Reference Example 24, 25] Preparation of carbon fiber filament/polyamide 6 resin high stiffness material

Treatment was performed similarly to Reference Example 1 by changing the number of the polyamide 6 films used and the number of laminate for preparation of the high stiffness material to obtain the high stiffness material with carbon fiber aligned in one direction, having a different volume fraction of the fiber and thickness, and the high stiffness material with 0˚/90˚ laminate. The evaluation results are shown in Table 11.

[Reference Example 26] Preparation of carbon fiber woven fabric/polyamide 6 resin high stiffness material

Treatment was performed similarly to Reference Example 5 by changing the number of the polyamide 6 films used and the number of laminate for preparation of the high stiffness material to obtain the high stiffness material with carbon fiber aligned in two directions, having a different volume fraction of the fiber and thickness. The evaluation results are shown in Table 11.

[Reference Example 27 to 31] Preparation of carbon fiber staple/polyamide 6 resin high stiffness material

Treatment was performed similarly to Reference Example 4 with the cut length of the carbon fiber staple used of 20 mm, by changing the fineness and weight of the carbon fiber, number of the polyamide 6 films, and the number of laminate and press molding pressure for preparation of the high stiffness material to obtain the high stiffness material of various isotropic carbon fibers. The evaluation results are shown in Table 12.

[Reference Example 32] Preparation of carbon fiber staple/polyamide 6 resin high stiffness material

Treatment was performed similarly to Reference Example 4 with the cut length of the carbon fiber staple of 50 mm, the number of polypropylene films for preparation of the partially impregnated isotropic material of 9 and the number of laminate for preparation of the high stiffness material of 9 to obtain the high stiffness material of isotropic carbon fiber with the degree of resin impregnation of 99%, thickness of 1.5 mm and the volume fraction of the fiber of 30%. The evaluation results are shown in Table 12.

[Reference Example 33] Preparation of carbon fiber staple/polyamide 6 resin high stiffness material

Treatment was performed similarly to Reference Example 4 with the cut length of the carbon fiber staple of 5 mm, the number of polypropylene films for preparation of the partially impregnated isotropic material of 9 and the number of laminate for preparation of the high stiffness material of 9 to obtain the high stiffness material of isotropic carbon fiber with the degree of resin impregnation of 99%, thickness of 1.5 mm and the volume fraction of the fiber of 30%. The evaluation results are shown in Table 12.

[Reference Example 34] Preparation of carbon fiber filament/polycarbonate resin high stiffness material

On an aluminum plate of a size of 40 cm x 30 cm with 3 polycarbonate films adhered on one side was wound carbon fiber with a homogeneous thickness so as to have a weight per unit area of 200 g/m$^2$. By heating and pressurizing this aluminum plate at the maximum temperature of 300˚C and the maximum pressure of 2.0 MPa for 10 minutes using a hot press MHPC manufactured by Meiki Co., Ltd., uni-directional material of carbon fiber partially impregnated with polycarbonate resin was obtained. The partially impregnated uni-directional material was then heated and pressurized at the maximum temperature of 300˚C and the maximum pressure of 3.0 MPa for 20 minutes using a mold of 30 cm x 20 cm after laminating 9 sheets of the material with the same fiber direction and cutting out to a suitable size to obtain the high stiffness material with the carbon fiber aligned in one direction. The degree of resin impregnation was 99%. Thickness was 1.5 mm and the volume fraction of the fiber was 30%. Tensile and compression tests of the fiber direction (0˚ direction) were performed using this molded body. In addition, the partially impregnated uni-directional material was heated and pressurized again after laminating 9 sheets alternately in the directions of 0˚, 90˚ and 0˚ to obtain a high stiffness material of 0˚/90˚ laminate. Thickness of the molded body was 1.5 mm and the volume fraction of the fiber was 30%. Specimens for drop impact test and high speed punching test were cut out from this 0˚/90˚ laminate and evaluated. The evaluation results are shown in Table 12.

[Reference Example 35] Preparation of carbon fiber staple/polycarbonate resin high stiffness material

Twenty-four g of carbon staple with a cut length of 20 mm was dispersed on an aluminum plate of 40 cm x 30 cm so that a homogeneous thickness was obtained. Three polycarbonate films were placed on this plate and heated and pressurized at the maximum temperature of 300˚C and the maximum pressure of 2.0 MPa for 10 minutes using a hot press MHPC manufactured by Meiki Co., Ltd. to obtain a isotropic carbon fiber material partially impregnated with polycarbonate resin. The partially impregnated isotropic material was then heated and pressurized at the maximum temperature of 300˚C and the maximum pressure of 3.0 MPa for 20 minutes using a mold of 30 cm x 20 cm after laminating 9 sheets of the material and cutting out to a suitable size to obtain the isotropic carbon fiber material with the degree of resin impregnation as high as 99%. Thickness of the high stiffness material with the isotropic carbon fiber was 1.5 mm and the volume fraction of the fiber was 30%. The evaluation results are shown in Table 12.

[Reference Example 36] Preparation of carbon fiber filament/polyethyleneterephthalate resin high stiffness material

On an aluminum plate of a size of 40 cm x 30 cm with 11 polyethyleneterephthalate films adhered on one side was wound carbon fiber with a homogeneous thickness so as to have a weight per unit area of 200 g/m$^2$. By heating and pressurizing this aluminum plate at the maximum temperature of 290˚C and the maximum pressure of 2.0 MPa for 10 minutes using a hot press MHPC manufactured by Meiki Co., Ltd., uni-directional material of carbon fiber partially impregnated with polyethyleneterephthalate resin was obtained. The partially impregnated uni-directional material was then heated and pressurized at the maximum temperature of 290˚C and the maximum pressure of 3.0 MPa for 20 minutes using a mold of 30 cm x 20 cm after laminating 9 sheets of the material with the same fiber direction and cutting out to a suitable size to obtain the high stiffness material with the carbon fiber aligned in one direction. The degree of resin impregnation was 99%. Thickness was 1.5 mm and the volume fraction of the fiber was 30%. Tensile and compression tests of the fiber direction (0˚ direction) were performed using this molded body. In addition, the partially impregnated uni-directional material was heated and pressurized again after laminating 9 sheets alternately in the directions of 0˚, 90˚ and 0˚ to obtain a high stiffness material of 0˚/90˚ laminate. Thickness of the molded body was 1.5 mm and the volume fraction of the fiber was 30%. Specimens for drop impact test and high speed punching test were cut out from this 0˚/90˚ laminate and evaluated. The evaluation results are shown in Table 13.

[Reference Example 37] Preparation of carbon fiber staple/polyethyleneterephthalate resin high stiffness material

Twenty-four g of carbon staple with a cut length of 20 mm was dispersed on an aluminum plate of 40 cm x 30 cm so that a homogeneous thickness was obtained. Eleven polyethyleneterephthalate films were placed on this plate and heated and pressurized at the maximum temperature of 290˚C and the maximum pressure of 2.0 MPa for 10 minutes using a hot press MHPC manufactured by Meiki Co., Ltd. to obtain a isotropic carbon fiber material partially impregnated with polyethyleneterephthalate resin. The partially impregnated isotropic material was then heated and pressurized at the maximum temperature of 290˚C and the maximum pressure of 3.0 MPa for 20 minutes using a mold of 30 cm x 20 cm after laminating 9 sheets of the material and cutting out to a suitable size to obtain the isotropic carbon fiber material with the degree of resin impregnation as high as 99%. Thickness of the high stiffness material with the isotropic carbon fiber was 1.5 mm and the volume fraction of the fiber was 30%. The evaluation results are shown in Table 13.

[Reference Example 38] Preparation of carbon fiber filament/polyethylenenaphthalate resin high stiffness material

On an aluminum plate of a size of 40 cm x 30 cm with 11 polyethylenenaphthalate films adhered on one side was wound carbon fiber with a homogeneous thickness so as to have a weight per unit area of 200 g/m$^2$. By heating and pressurizing this aluminum plate at the maximum temperature of 300˚C and the maximum pressure of 2.0 MPa for 10 minutes using a hot press MHPC manufactured by Meiki Co., Ltd., uni-directional material of carbon fiber partially impregnated with polyethylenenaphthalate resin was obtained. The partially impregnated uni-directional material was then heated and pressurized at the maximum temperature of 290˚C and the maximum pressure of 3.0 MPa for 20 minutes using a mold of 30 cm x 20 cm after laminating 9 sheets of the material with the same fiber direction and cutting out to a suitable size to obtain the high stiffness material with the carbon fiber aligned in one direction. The degree of resin impregnation was 99%. Thickness was 1.5 mm and the volume fraction of the fiber was 30%. Tensile and compression tests of the fiber direction (0˚ direction) were performed using this molded body. In addition, the partially impregnated uni-directional material was heated and pressurized again after laminating 9 sheets alternately in the directions of 0˚, 90˚ and 0˚ to obtain a high stiffness material of 0˚/90˚ laminate. Thickness of the molded body was 1.5 mm and the volume fraction of the fiber was 30%. Specimens for drop impact test and high speed punching test were cut out from this 0˚/90˚ laminate and evaluated. The evaluation results are shown in Table 13.

[Reference Example 39] Preparation of carbon fiber staple/polyethylenenaphthalate resin high stiffness material

Twenty-four g of carbon staple with a cut length of 20 mm was dispersed on an aluminum plate of 40 cm x 30 cm so that a homogeneous thickness was obtained. Eleven polyethylenenaphthalate films were placed on this plate and heated and pressurized at the maximum temperature of 300˚C and the maximum pressure of 2.0 MPa for 10 minutes using a hot press MHPC manufactured by Meiki Co., Ltd. to obtain a isotropic carbon fiber material partially impregnated with polyethylenenaphthalate resin. The partially impregnated isotropic material was then heated and pressurized at the maximum temperature of 300˚C and the maximum pressure of 3.0 MPa for 20 minutes using a mold of 30 cm x 20 cm after laminating 9 sheets of the material and cutting out to a suitable size to obtain the isotropic carbon fiber material with the degree of resin impregnation as high as 99%. Thickness of the high stiffness material with the isotropic carbon fiber was 1.5 mm and the volume fraction of the fiber was 30%. The evaluation results are shown in Table 13.

The high stiffness materials of Reference Examples 1 to 39 were shown to be excellent in strength and modulus as the results of tensile and compression tests.

[Example 57] Preparation of carbon fiber filament/polyethyleneterephthalate twisted yarn cord/polyamide 6 resin sandwich material

A laminate composed of the polyethyleneterephthalate twisted yarn cord/polyamide 6 resin composite material of Example 52 as a core material sandwiched by two sheets of the carbon fiber filament/polyamide 6 resin high stiffness material of Reference Example 1 as a skin material was charged in a mold of 30 cm x 20 cm. The interfaces between the skin materials and core material were welded by heating and pressurizing at the maximum temperature of 240˚C and the maximum pressure of 0.5 MPa for 10 minutes using a hot press MHPC manufactured by Meiki Co., Ltd. to obtain the sandwich material of carbon fiber filament/polyethyleneterephthalate twisted yarn cord/polyamide 6 resin. Thickness of the sandwich material was 2.0 mm and the volume fraction of the core material was 50%. Specimens for tensile strength test and compression test were cut out from the sandwich material obtained based on the carbon fiber direction and evaluated. Specimens for drop impact test and high speed punching test were similarly cut out from the sandwich material and evaluated. The evaluation results are shown in Table 14.

[Example 58] Preparation of carbon fiber filament/polyethyleneterephthalate twisted yarn cord/polyamide 6 resin sandwich material

Treatment was performed similarly to Example 57 except that the polyethyleneterephthalate twisted yarn cord/polyamide 6 composite material of Example 53 was used as a core material to obtain the sandwich material of carbon fiber filament/polyethyleneterephthalate twisted yarn cord/polyamide 6 resin. Thickness of the sandwich material was 2.0 mm and the volume fraction of the core material was 50%. The evaluation results are shown in Table 14.

[Example 59] Preparation of carbon fiber filament/polyethyleneterephthalate woven fabric/polyamide 6 resin sandwich material

Treatment was performed similarly to Example 57 except that the polyethyleneterephthalate woven fabric/polyamide 6 resin composite material of Example 54 was used as a core material to obtain the sandwich material of carbon fiber filament/polyethyleneterephthalate woven fabric/polyamide 6 resin. Thickness of the sandwich material was 2.0 mm and the volume fraction of the core material was 50%. The evaluation results are shown in Table 14.

[Example 60] Preparation of carbon fiber filament/polyethyleneterephthalate knitted fabric/polyamide 6 resin sandwich material

Treatment was performed similarly to Example 57 except that the polyethyleneterephthalate knitted fabric/polyamide 6 resin composite material of Example 55 was used as a core material to obtain the sandwich material of carbon fiber filament/polyethyleneterephthalate knitted fabric/polyamide 6 resin. Thickness of the sandwich material was 2.0 mm and the volume fraction of the core material was 50%. The evaluation results are shown in Table 14.

[Comparative Example 10] Preparation of carbon fiber filament/polyamide 6 resin bi-directional high stiffness material

Four sheets of the carbon fiber filament/polyamide 6 resin high stiffness material of Reference Example 1 were laminated in the directions of 0˚, 90˚, 90˚ and 0˚ based on the fiber axis direction and charged in a mold of 30 cm x 20 cm. The interfaces between each layer were welded by heating and pressurizing at the maximum temperature of 240˚C and the maximum pressure of 0.5 MPa for 10 minutes using a hot press MHPC manufactured by Meiki Co., Ltd. to obtain the bi-directional high stiffness material of carbon fiber filament/polyamide 6 resin. Thickness of the sandwich material was 2.0 mm Specimens for tensile strength test and compression test were cut out from the bi-directional high stiffness material obtained based on one fiber axis direction and evaluated. Specimens for drop impact test and high speed punching test were similarly cut out and evaluated. The evaluation results are shown in Table 14.

[Comparative Example 11] Preparation of carbon fiber filament/polyamide 6 resin sandwich material

Forty-four polyamide 6 films were laminated and charged in a mold of 30 cm x 20 cm and heated and pressurized at the maximum temperature of 240˚C and the maximum pressure of 0.5 MPa for 10 minutes using a hot press MHPC manufactured by Meiki Co., Ltd. to obtain the molded article of polyamide 6 resin. Thickness was 1.0 mm. A laminate composed of the polyamide 6 molded body obtained as a core material sandwiched by two sheets of the carbon fiber filament/polyamide 6 resin high stiffness material of Reference Example 1 as a skin material was charged in a mold of 30 cm x 20 cm. The interfaces between the skin materials and core material were welded by heating and pressurizing at the maximum temperature of 240˚C and the maximum pressure of 0.2 MPa for 10 minutes using a hot press MHPC manufactured by Meiki Co., Ltd. to obtain the sandwich material of carbon fiber filament/polyamide 6 resin. Thickness of the sandwich material was 2.0 mm and the volume fraction of the core material was 50%. Specimens for tensile strength test and compression test were cut out from the sandwich material obtained based on the carbon fiber direction and evaluated. Specimens for drop impact test and high speed punching test were similarly cut out from the sandwich material and evaluated. The evaluation results are shown in Table 14.

[Example 61] Preparation of polyethyleneterephthalate twisted yarn cord/polyamide 6 resin composite material

Two sheets of the polyethyleneterephthalate twisted yarn cord/polyamide 6 resin composite material of Example 52 were laminated and charged in a mold of 30 cm x 20 cm. The interface was welded by heating and pressurizing at the maximum temperature of 240˚C and the maximum pressure of 0.5 MPa for 10 minutes using a hot press MHPC manufactured by Meiki Co., Ltd. to obtain the polyethyleneterephthalate twisted yarn cord/polyamide 6 resin composite material. Thickness of the composite material was 2.0 mm. Specimens for tensile strength test and compression test were cut out from the composite material obtained based on the warp direction and evaluated. Specimens for drop impact test and high speed punching test were similarly cut out and evaluated. The evaluation results are shown in Table 15.

[Example 62] Preparation of polyamide 6 resin/polyethyleneterephthalate twisted yarn cord sandwich material

Twenty-two polyamide 6 films were laminated and charged in a mold of 30 cm x 20 cm and heated and pressurized at the maximum temperature of 240˚C and the maximum pressure of 0.5 MPa for 10 minutes using a hot press MHPC manufactured by Meiki Co., Ltd. to obtain the molded article of polyamide 6 resin. Thickness was 0.5 mm. A laminate composed of two sheets of the polyamide 6 molded article obtained as a skin material sandwiching the polyethyleneterephthalate twisted yarn cord/polyamide 6 resin composite material of Example 52 as a core material was charged in a mold of 30 cm x 20 cm. The interfaces between the skin materials and core material was welded by heating and pressurizing at the maximum temperature of 240˚C and the maximum pressure of 0.2 MPa for 10 minutes using a hot press MHPC manufactured by Meiki Co., Ltd. to obtain the sandwich material of polyamide 6 resin/polyethyleneterephthalate twisted yarn cord. Thickness of the sandwich material was 2.0 mm and the volume fraction of the core material was 50%. Specimens for tensile strength test and compression test were cut out from the sandwich material obtained based on the warp direction and evaluated. Specimens for drop impact test and high speed punching test were similarly cut out from the sandwich material and evaluated. The evaluation results are shown in Table 15.

[Example 63] Preparation of carbon fiber filament/polyethyleneterephthalate twisted yarn cord/polyamide 6 resin sandwich material

Treatment was performed similarly to Example 57 except that the carbon fiber filament/polyamide 6 resin high stiffness material of Reference Example 2 was used as a skin material to obtain the sandwich material of carbon fiber filament/polyethyleneterephthalate twisted yarn cord/polyamide 6 resin. Thickness of the sandwich material was 2.0 mm and the volume fraction of the core material was 50%. Specimens for tensile strength test and compression test were cut out from the sandwich material obtained based on the carbon fiber direction and evaluated. Specimens for drop impact test and high speed punching test were similarly cut out from the sandwich material and evaluated. The evaluation results are shown in Table 15.

[Example 64] Preparation of carbon fiber filament/polyethyleneterephthalate twisted yarn cord/polyamide 6 resin sandwich material

Treatment was performed similarly to Example 57 except that the carbon fiber filament/polyamide 6 resin high stiffness material of Reference Example 3 was used as a skin material to obtain the sandwich material of carbon fiber filament/polyethyleneterephthalate twisted yarn cord/polyamide 6 resin. Thickness of the sandwich material was 2.0 mm and the volume fraction of the core material was 50%. The evaluation results are shown in Table 15.

[Example 65] Preparation of carbon fiber staple/polyethyleneterephthalate twisted yarn cord/polyamide 6 resin sandwich material

Treatment was performed similarly to Example 57 except that the carbon fiber staple/polyamide 6 resin high stiffness material of Reference Example 4 was used as a skin material to obtain the sandwich material of carbon fiber staple/polyethyleneterephthalate twisted yarn cord/polyamide 6 resin. Thickness of the sandwich material was 2.0 mm and the volume fraction of the core material was 50%. The evaluation results are shown in Table 15.

[Example 66] Preparation of carbon fiber woven fabric/polyethyleneterephthalate twisted yarn cord/polyamide 6 resin sandwich material

Treatment was performed similarly to Example 57 except that the carbon fiber woven fabric/polyamide 6 resin high stiffness material of Reference Example 5 was used as a skin material to obtain the sandwich material of carbon fiber woven fabric/polyethyleneterephthalate twisted yarn cord/polyamide 6 resin. Thickness of the sandwich material was 2.0 mm and the volume fraction of the core material was 50%. The evaluation results are shown in Table 15.

[Example 67] Preparation of carbon fiber filament/polyethyleneterephthalate twisted yarn cord/polypropylene resin sandwich material

A laminate composed of the polyethyleneterephthalate twisted yarn cord/polypropylene resin composite material of Example 56 as a core material sandwiched by two sheets of the carbon fiber filament/polypropylene resin high stiffness material of Reference Example 6 as a skin material was charged in a mold of 30 cm x 20 cm. The interfaces between the skin materials and core material were welded by heating and pressurizing at the maximum temperature of 200˚C and the maximum pressure of 0.5 MPa for 10 minutes using a hot press MHPC manufactured by Meiki Co., Ltd. to obtain the sandwich material of carbon fiber filament/polyethyleneterephthalate twisted yarn cord/polypropylene resin. Thickness of the sandwich material was 2.0 mm and the volume fraction of the core material was 50%. Specimens for tensile strength test and compression test were cut out from the sandwich material obtained based on the carbon fiber direction and evaluated. Specimens for drop impact test and high speed punching test were similarly cut out from the sandwich material and evaluated. The evaluation results are shown in Table 16.

[Comparative Example 12] Preparation of carbon fiber filament/polypropylene resin bi-directional high stiffness material

Four sheets of the carbon fiber filament/polypropylene resin high stiffness material of Reference Example 6 were laminated in the directions of 0˚, 90˚, 90˚ and 0˚ based on the fiber axis direction and charged in a mold of 30 cm x 20 cm. The interfaces between each layer were welded by heating and pressurizing at the maximum temperature of 200˚C and the maximum pressure of 0.5 MPa for 10 minutes using a hot press MHPC manufactured by Meiki Co., Ltd. to obtain the bi-directional high stiffness material of carbon fiber filament/polypropylene resin. Thickness of the sandwich material was 2.0 mm. Specimens for tensile strength test and compression test were cut out from the two-directional high stiffness material obtained based on one fiber axis direction and evaluated. Specimens for drop impact test and high speed punching test were similarly cut out and evaluated. The evaluation results are shown in Table 16.

[Example 68] Preparation polyethyleneterephthalate twisted yarn cord/polypropylene resin composite material

Two sheets of the polyethyleneterephthalate twisted yarn cord/polypropylene resin composite material of Example 56 were laminated and charged in a mold of 30 cm x 20 cm. The interface was welded by heating and pressurizing at the maximum temperature of 200˚C and the maximum pressure of 0.5 MPa for 10 minutes using a hot press MHPC manufactured by Meiki Co., Ltd. to obtain the polyethyleneterephthalate twisted yarn cord/polypropylene resin composite material. Thickness of the composite material was 2.0 mm. Specimens for tensile strength test and compression test were cut out from the composite material obtained based on the fiber axis direction and evaluated. Specimens for drop impact test and high speed punching test were similarly cut out and evaluated. The evaluation results are shown in Table 16.

[Comparative Example 13] Preparation of carbon fiber filament/polypropylene resin sandwich material

Thirty-eight polypropylene films were laminated and charged in a mold of 30 cm x 20 cm and heated and pressurized at the maximum temperature of 200˚C and the maximum pressure of 0.5 MPa for 10 minutes using a hot press MHPC manufactured by Meiki Co., Ltd. to obtain the molded article of polypropylene. Thickness was 1.0 mm. A laminate composed of the polypropylene molded article obtained as a core material sandwiched by two sheets of the carbon fiber filament/polypropylene resin high stiffness material of Reference Example 6 as a skin material was charged in a mold of 30 cm x 20 cm. The interfaces between the skin materials and core material were welded by heating and pressurizing at the maximum temperature of 200˚C and the maximum pressure of 0.2 MPa for 10 minutes using a hot press MHPC manufactured by Meiki Co., Ltd. to obtain the sandwich material of carbon fiber filament/polypropylene resin. Thickness of the sandwich material was 2.0 mm and the volume fraction of the core material was 50%. Specimens for tensile strength test and compression test were cut out from the sandwich material obtained based on the carbon fiber direction and evaluated. Specimens for drop impact test and high speed punching test were similarly cut out from the sandwich material and evaluated. The evaluation results are shown in Table 16.

[Example 69] Preparation of polypropylene resin/polyethyleneterephthalate twisted yarn cord sandwich material

Nineteen polypropylene films were laminated and charged in a mold of 30 cm x 20 cm and heated and pressurized at the maximum temperature of 200˚C and the maximum pressure of 0.5 MPa for 10 minutes using a hot press MHPC manufactured by Meiki Co., Ltd. to obtain the molded article of polypropylene. Thickness was 0.5 mm. A laminate composed of two sheets of the polypropylene molded article obtained as a skin material sandwiching the polyethyleneterephthalate twisted yarn cord/polypropylene resin composite material of Example 56 as a core material was charged in a mold of 30 cm x 20 cm. The interfaces between the skin materials and core material were welded by heating and pressurizing at the maximum temperature of 200˚C and the maximum pressure of 0.2 MPa for 10 minutes using a hot press MHPC manufactured by Meiki Co., Ltd. to obtain the sandwich material of polypropylene resin/polyethyleneterephthalate twisted yarn cord. Thickness of the sandwich material was 2.0 mm and the volume fraction of the core material was 50%. Specimens for tensile strength test and compression test were cut out from the sandwich material obtained based on the fiber axis direction and evaluated. Specimens for drop impact test and high speed punching test were similarly cut out from the sandwich material and evaluated. The evaluation results are shown in Table 16.

[Example 70] Preparation of glass fiber filament/polyethyleneterephthalate twisted yarn cord/polyamide 6 resin sandwich material

Treatment was performed similarly to Example 57 except that the glass fiber filament/polyamide 6 resin high stiffness material of Reference Example 7 was used as a skin material to obtain the sandwich material of glass fiber filament/polyethyleneterephthalate twisted yarn cord/polyamide 6 resin. Thickness of the sandwich material was 2.0 mm and the volume fraction of the core material was 50%. Specimens for tensile strength test and compression test were cut out from the sandwich material obtained based on the glass fiber direction and evaluated. Specimens for drop impact test and high speed punching test were similarly cut out from the sandwich material and evaluated. The evaluation results are shown in Table 17.

[Comparative Example 14] Preparation of glass fiber filament/polyamide 6 resin bi-directional high stiffness material

Four sheets of the glass fiber filament/polyamide 6 resin high stiffness material of Reference Example 7 were laminated in the directions of 0˚, 90˚, 90˚ and 0˚ based on the fiber axis direction and charged in a mold of 30 cm x 20 cm. The interfaces between each layer were welded by heating and pressurizing at the maximum temperature of 240˚C and the maximum pressure of 0.5 MPa for 10 minutes using a hot press MHPC manufactured by Meiki Co., Ltd. to obtain the bi-directional high stiffness material of glass fiber filament/polyamide 6 resin. Thickness of the high stiffness material was 2.0 mm. Specimens for tensile strength test and compression test were cut out from the bi-directional high stiffness material obtained based on one fiber axis direction and evaluated. Specimens for drop impact test and high speed punching test were similarly cut out and evaluated. The evaluation results are shown in Table 17.

[Comparative Example 15] Preparation of glass fiber filament/polyamide 6 resin sandwich material

Forty-four polyamide 6 films were laminated and charged in a mold of 30 cm x 20 cm and heated and pressurized at the maximum temperature of 240˚C and the maximum pressure of 0.5 MPa for 10 minutes using a hot press MHPC manufactured by Meiki Co., Ltd. to obtain the molded article of polyamide 6. Thickness was 1.0 mm. A laminate composed of the polyamide 6 molded article obtained as a core material sandwiched by two sheets of the glass fiber filament/polyamide 6 resin high stiffness material of Reference Example 7 as a skin material was charged in a mold of 30 cm x 20 cm. The interfaces between the skin materials and core material were welded by heating and pressurizing at the maximum temperature of 240˚C and the maximum pressure of 0.2 MPa for 10 minutes using a hot press MHPC manufactured by Meiki Co., Ltd. to obtain the sandwich material of glass fiber filament/polyamide 6 resin. Thickness of the sandwich material was 2.0 mm and the volume fraction of the core material was 50%. Specimens for tensile strength test and compression test were cut out from the sandwich material obtained based on the glass fiber direction and evaluated. Specimens for drop impact test and high speed punching test were similarly cut out from the sandwich material and evaluated. The evaluation results are shown in Table 17.

[Example 71] Preparation of aramid fiber filament/polyethyleneterephthalate twisted yarn cord/polyamide 6 resin sandwich material

Treatment was performed similarly to Example 57 except that the aramid fiber filament/polyamide 6 resin high stiffness material of Reference Example 8 was used as a skin material to obtain the sandwich material of aramid fiber filament/polyethyleneterephthalate twisted yarn cord/polyamide 6 resin. Thickness of the sandwich material was 2.0 mm and the volume fraction of the core material was 50%. Specimens for tensile strength test and compression test were cut out from the sandwich material obtained based on the aramid fiber direction and evaluated. Specimens for drop impact test and high speed punching test were similarly cut out from the sandwich material and evaluated. The evaluation results are shown in Table 17.

[Comparative Example 16] Preparation of aramid fiber filament/polyamide 6 resin bi-directional high stiffness material

Four sheets of the aramid fiber filament/polyamide 6 resin high stiffness material of Reference Example 8 were laminated in the directions of 0˚, 90˚, 90˚ and 0˚ based on the fiber axis direction and charged in a mold of 30 cm x 20 cm. The interfaces between each layer were welded by heating and pressurizing at the maximum temperature of 240˚C and the maximum pressure of 0.5 MPa for 10 minutes using a hot press MHPC manufactured by Meiki Co., Ltd. to obtain the bi-directional high stiffness material of aramid fiber filament/polyamide 6 resin. Thickness of the high stiffness material was 2.0 mm. Specimens for tensile strength test and compression test were cut out from the bi-directional high stiffness material obtained based on one fiber axis direction and evaluated. Specimens for drop impact test and high speed punching test were similarly cut out and evaluated. The evaluation results are shown in Table 17.

[Comparative Example 17] Preparation of aramid fiber filament/polyamide 6 resin sandwich material

Forty-four polyamide 6 films were laminated and charged in a mold of 30 cm x 20 cm and heated and pressurized at the maximum temperature of 240˚C and the maximum pressure of 0.5 MPa for 10 minutes using a hot press MHPC manufactured by Meiki Co., Ltd. to obtain the molded article of polyamide 6. Thickness was 1.0 mm. A laminate composed of the polyamide 6 resin molded article obtained as a core material sandwiched by two sheets of the aramid fiber filament/polyamide 6 resin high stiffness material of Reference Example 8 as a skin material was charged in a mold of 30 cm x 20 cm. The interfaces between the skin materials and core material were welded by heating and pressurizing at the maximum temperature of 240˚C and the maximum pressure of 0.2 MPa for 10 minutes using a hot press MHPC manufactured by Meiki Co., Ltd. to obtain the sandwich material of aramid fiber filament/polyamide 6 resin. Thickness of the sandwich material was 2.0 mm and the volume fraction of the core material was 50%. Specimens for tensile strength test and compression test were cut out from the sandwich material obtained based on the aramid fiber direction and evaluated. Specimens for drop impact test and high speed punching test were similarly cut out from the sandwich material and evaluated. The evaluation results are shown in Table 17.

[Example 72] Preparation of carbon fiber staple/polyethyleneterephthalate twisted yarn cord/polycarbonate resin sandwich material

A laminate composed of the polyethyleneterephthalate twisted yarn cord/polycarbonate resin composite material of Example 42 as a core material sandwiched by two sheets of the carbon fiber staple/polycarbonate resin high stiffness material of Reference Example 35 as a skin material was charged in a mold of 30 cm x 20 cm. The interfaces between the skin materials and core material were welded by heating and pressurizing at the maximum temperature of 250˚C and the maximum pressure of 0.5 MPa for 10 minutes using a hot press MHPC manufactured by Meiki Co., Ltd. to obtain the sandwich material of carbon fiber staple/polyethyleneterephthalate twisted yarn cord/polypropylene resin. Thickness of the sandwich material was 4.0 mm and the volume fraction of the core material was 50%. Specimens for tensile strength test, compression test, drop impact test and high speed punching test were cut out from the sandwich material obtained and evaluated. The evaluation results are shown in Table 18.

[Comparative Example 18] Preparation of carbon fiber staple/polycarbonate resin sandwich material

Eleven polycarbonate films were laminated and charged in a mold of 30 cm x 20 cm and heated and pressurized at the maximum temperature of 250˚C and the maximum pressure of 2.0 MPa for 10 minutes using a hot press MHPC manufactured by Meiki Co., Ltd. to obtain the molded article of polycarbonate. Thickness was 1.0 mm. A laminate composed of the polycarbonate molded article obtained as a core material sandwiched by two sheets of the carbon fiber staple/polycarbonate resin high stiffness material of Reference Example 35 as a skin material was charged in a mold of 30 cm x 20 cm. The interfaces between the skin materials and core material were welded by heating and pressurizing at the maximum temperature of 250˚C and the maximum pressure of 0.5 MPa for 10 minutes using a hot press MHPC manufactured by Meiki Co., Ltd. to obtain the sandwich material of carbon fiber staple/polycarbonate resin. Thickness of the sandwich material was 4.0 mm and the volume fraction of the core material was 50%. Specimens for tensile strength test, compression test, drop impact test and high speed punching test were cut out from the sandwich material obtained and evaluated. The evaluation results are shown in Table 18.

[Example 73] Preparation of carbon fiber staple/polyethylenenaphthalate twisted yarn cord/polyethyleneterephthalate resin sandwich material

A laminate composed of the polyethylenenaphthalate twisted yarn cord/polyethyleneterephthalate resin composite material of Example 49 as a core material sandwiched by two sheets of the carbon fiber staple/polyethyleneterephthalate resin high stiffness material of Reference Example 37 as a skin material was charged in a mold of 30 cm x 20 cm. The interfaces between the skin materials and core material were welded by heating and pressurizing at the maximum temperature of 270˚C and the maximum pressure of 0.2 MPa for 10 minutes using a hot press MHPC manufactured by Meiki Co., Ltd. to obtain the sandwich material of carbon fiber staple/polyethylenenaphthalate twisted yarn cord/polyethyleneterephthalate resin. Thickness of the sandwich material was 4.0 mm and the volume fraction of the core material was 50%. Specimens for tensile strength test, compression test, drop impact test and high speed punching test were cut out from the sandwich material obtained and evaluated. The evaluation results are shown in Table 18.

[Comparative Example 19] Preparation of carbon fiber staple/polyethyleneterephthalate resin sandwich material

Forty-four polyethyleneterephthalate films were laminated and charged in a mold of 30 cm x 20 cm and heated and pressurized at the maximum temperature of 270˚C and the maximum pressure of 2.0 MPa for 10 minutes using a hot press MHPC manufactured by Meiki Co., Ltd. to obtain the molded article of polyethyleneterephthalate. Thickness was 1.0 mm. A laminate composed of the polyethyleneterephthalate molded article obtained as a core material sandwiched by two sheets of the carbon fiber staple/polyethyleneterephthalate resin high stiffness material of Reference Example 37 as a skin material was charged in a mold of 30 cm x 20 cm. The interfaces between the skin materials and core material were welded by heating and pressurizing at the maximum temperature of 270˚C and the maximum pressure of 0.2 MPa for 10 minutes using a hot press MHPC manufactured by Meiki Co., Ltd. to obtain the sandwich material of carbon fiber staple/polyethyleneterephthalate resin. Thickness of the sandwich material was 4.0 mm and the volume fraction of the core material was 50%. Specimens for tensile strength test, compression test, drop impact test and high speed punching test were cut out from the sandwich material obtained and evaluated. The evaluation results are shown in Table 18.

[Example 74] Preparation of carbon fiber staple/high melting point polyethylenenaphthalate twisted yarn cord/polyethylenenaphthalate resin sandwich material

A laminate composed of the high melting point polyethylenenaphthalate twisted yarn cord/polyethylenenaphthalate resin composite material of Example 51 as a core material sandwiched by two sheets of the carbon fiber staple/polyethylenenaphthalate resin high stiffness material of Reference Example 39 as a skin material was charged in a mold of 30 cm x 20 cm. The interfaces between the skin materials and core material were welded by heating and pressurizing at the maximum temperature of 280˚C and the maximum pressure of 0.2 MPa for 10 minutes using a hot press MHPC manufactured by Meiki Co., Ltd. to obtain the sandwich material of carbon fiber staple/high melting point polyethylenenaphthalate twisted yarn cord/polyethylenenaphthalate resin. Thickness of the sandwich material was 4.0 mm and the volume fraction of the core material was 50%. Specimens for tensile strength test, compression test, drop impact test and high speed punching test were cut out from the sandwich material obtained and evaluated. The evaluation results are shown in Table 18.

[Comparative Example 20] Preparation of carbon fiber staple/polyethylenenaphthalate resin sandwich material

Forty-four polyethylenenaphthalate films were laminated and charged in a mold of 30 cm x 20 cm and heated and pressurized at the maximum temperature of 280˚C and the maximum pressure of 2.0 MPa for 10 minutes using a hot press MHPC manufactured by Meiki Co., Ltd. to obtain the molded article of polyethylenenaphthalate. Thickness was 1.0 mm. A laminate composed of the polyethylenenaphthalate molded article obtained as a core material sandwiched by two sheets of the carbon fiber staple/polyethylenenaphthalate resin high stiffness material of Reference Example 39 as a skin material was charged in a mold of 30 cm x 20 cm. The interfaces between the skin materials and core material were welded by heating and pressurizing at the maximum temperature of 280˚C and the maximum pressure of 0.2 MPa for 10 minutes using a hot press MHPC manufactured by Meiki Co., Ltd. to obtain the sandwich material of carbon fiber staple/polyethylenenaphthalate resin. Thickness of the sandwich material was 4.0 mm and the volume fraction of the core material was 50%. Specimens for tensile strength test, compression test, drop impact test and high speed punching test were cut out from the sandwich material obtained and evaluated. The evaluation results are shown in Table 18.

The high stiffness materials of Reference Examples were shown to be excellent in strength and modulus of elasticity as the results of tensile and compression tests. In addition, the composite materials of Examples were shock absorbing materials with high energy absorption property. The sandwich materials of Examples 57 to 60, 63 to 67 and 70 to 74, which are a combination of these high stiffness materials and composite materials, have both of their favorite characteristics, are excellent in mechanical strength including strength and stiffness, and also excellent in impact resistance. The molded articles obtained by molding such sandwich materials are generally useful in the application of industrial use, especially in automobile construction parts, automobile exterior parts and automobile interior parts.

The evaluation results of the composite materials and sandwich materials obtained are shown in the following Tables 1 to 18.

Instruction of the symbols

1. Punching direction
2. Striker
3. Opening
4. Holder of specimen
5. Specimen

Table 1

| Component, material, test item, etc. | | | Example 1 | Example 2 | Example 3 | Example 4 | Example 5 | Example 6 | Comparative Example 1 | Comparative Example 2 |
|---|---|---|---|---|---|---|---|---|---|---|
| Fiber | | Organic fiber | PEN[1] | PEN[2] | PEN[2] | PEN[2] | PEN[2] | PEN[2] | PEN[2] | None |
| | | Fineness of original yarn (dtex) | 1100 | 1100 | 1100 | 560 | 1100 | 1100 | 1100 | - |
| | | Form | Woven fabric | Woven fabric | Woven fabric | Knitted fabric | Twisted yarn cord | Twisted yarn cord | Staple | - |
| | | Structure, composition, etc. | Twill weave: | Plain weave | Plain weave | Raschel knit | Double twist | Double twist | Cut length 1 mm | - |
| | | First/second twist count $(T/m)^{4)}$ | 30 | 120 | 120 | 60 | 200/275 | 200/275 | - | - |
| | | Average interval between the cord (mm) | 0.7 | 14 | 1.4 | 1.1 | 10 | 1.0 | - | - |
| | | Weight per unit area $(g/m^2)$ | 310 | 175 | 175 | 120 | 230 | 230 | - | - |
| Resin | | | PP[3] | PP[3] | PP[3] | PP[3] | PP[3] | PP[3] | PP[3] | PP[3] |

32

| Component, material, test item, etc. | | Example 1 | Example 2 | Example 3 | Example 4 | Example 5 | Example 6 | Comparative Example 1 | Comparative Example 2 |
|---|---|---|---|---|---|---|---|---|---|
| Composite material | Volume fraction of fiber (%) | 35 | 37 | 37 | 34 | 33 | 33 | 34 | 0 |
| | Fiber weight per unit area per 10 mm thickness (g/m$^2$) | 4830 | 5106 | 5106 | 4692 | 4554 | 4554 | 4692 | 0 |
| | Void ratio between fiber bundles (%) | 2 | 2 | 2 | 2 | 2 | 2 | - | - |
| | Degree of impregnation within fiber bundle (%) | 35 | 30 | 95 | 28 | 15 | 70 | 100 | - |
| | Thickness of 1 ply (mm) | 0.4 | 0.4 | 0.3 | 0.2 | 0.4 | 0.4 | - | - |
| Tensile Strength test 5) | Strength (MPa) | 178 | 158 | 155 | 118 | 315 | 311 | 103 | 35 |
| | Elongation (%) | 15 | 32 | 30 | 18 | 45 | 41 | 12 | 8 |
| | Modulus of elasticity (GPa) | 3.0 | 2.0 | 2.0 | 2.1 | 2.3 | 2.2 | 20 | 1 8 |
| Drop impact test[6] | The number of ply for test specimen/ thickness (mm) | 4/1.6 | 4/1.4 | 4/1.3 | 4/0.9 | 3/1.2 | 3/1.2 | -/1.2 | -/1.2 |
| | Maximum load (kN) | 5.0 | 6.1 | 5.3 | 5 1 | 60 | 5.6 | 3.7 | 0.8 |
| | Absorbed energy (J) | 44 | 45 | 43 | 44 | 45 | 44 | 33 | 3 |

(continued)

| Component, material, test item, etc. | | Example 1 | Example 2 | Example 3 | Example 4 | Example 5 | Example 6 | Comparative Example 1 | Comparative Example 2 |
|---|---|---|---|---|---|---|---|---|---|
| High speed punching test[7] | The number of ply for test specimen/ thickness (mm) | 4/1.6 | 4/1.4 | 4/13 | 4/0.9 | 3/1.2 | 3/1.2 | -/1.2 | -/12 |
| | Maximum load (kN) | 3.8 | 28 | 29 | 2.4 | 3.3 | 3.2 | 2.0 | 0.2 |
| | Maximum load point displacement (mm) | 10 | 105 | 9.1 | 9.2 | 12.8 | 11.5 | 6.3 | 2.7 |
| | Absorbed energy (J) | 14.4 | 12.5 | 117 | 10.9 | 15.3 | 13.8 | 7.5 | 0.3 |

1) PEN: polyethylenenaphthalate, 2) PET polyethyleneterephthalate, 3) PP. polypropylene 4) Twist count: For twisted yarn cord, each of first/second twist count is described since it is double twisted. For yarns constituting a woven fabric, single twist count is described since it is single twisted.

5) Tensile strength test. Composite material obtained was tested by stretching in the fiber direction.

6) Drop impact test. In the case where the reinforcement material is twisted yarn cord or non-twisted yarn cord, the test specimen was prepared by laminating 3 plies of the composite material in the directions of 0˚, 90˚ and 0˚ and molding.

7) High speed punching: The test specimen was prepared by alternately laminating 3 to 12 phes of the composite material obtained in the directions of 0˚, 90˚, and so on and molding. Impact speed: 11 m/sec, striker diameter 10 mm, opening diameter of holder: 40 mm.

Table 2

| Component, material, test item, etc. | | Example 7 | Example 8 | Example 9 | Comparative Example 3 | Comparative Example 4 | Comparative Example 5 |
|---|---|---|---|---|---|---|---|
| Fiber | Organic fiber | PET[1] | PET[1] | PEN[2] | None | None | None |
| | Fineness of original yarn (dtex) | 1100 | 1100 | 1100 | - | - | - |
| | Form | Twisted yarn cord | Twisted yarn cord | Woven fabric | - | - | - |
| | Structure, composition, etc. | Double twist | Double twist | Twill weave: | - | - | - |
| | First/second twist count (T/m)[5] | 200/275 | 200/275 | 30 | - | - | - |
| | Average interval between the cord (mm) | 1.0 | 1.0 | 07 | - | - | - |
| | Weight per unit area (g/m$^2$) | 230 | 230 | 310 | - | - | - |
| Resin | | PA6[3] | PC[4] | PET[1] | PC[4] | PA6[3] | PET[1] |
| Composite material | Volume fraction of fiber (%) | 35 | 30 | 35 | 0 | 0 | 0 |
| | Fiber weight per unit area per 10 mm thickness (g/m$^2$) | 4830 | 4140 | 4830 | 0 | 0 | 0 |
| | Void ratio between fiber bundles (%) | 2 | 2 | 2 | - | - | - |
| | Degree of impregnation within fiber bundle (%) | 20 | 10 | 23 | - | - | - |
| | Thickness of 1 ply (mm) | 0.4 | 0.4 | 0.4 | - | - | - |
| Tensile strength test[6] | Strength (MPa) | 334 | 333 | 190 | 59 | 65 | 61 |
| | Elongation (%) | 36 | 40 | 13 | 4 | 4 | 3 |
| | Modulus of elasticity (GPa) | 2.3 | 2.2 | 3.3 | 2.0 | 2.0 | 2.2 |

(continued)

| Component, material, test item, etc. | | Example 7 | Example 8 | Example 9 | Comparative Example 3 | Comparative Example 4 | Comparative Example 5 |
|---|---|---|---|---|---|---|---|
| Drop impact test[7] | The number of ply for test specimen/ thickness (mm) | 3/1.2 | 3/1.3 | 4/1.6 | -/1.2 | -/1.2 | -/12 |
| | Maximum load (kN) | 6.0 | 6.1 | 5.2 | 3.3 | 3.0 | 2.6 |
| | Absorbed energy (J) | 45 | 45 | 44 | 28 | 25 | 23 |
| High speed punching test[8] | The number of ply for test specimen/ thickness (mm) | 3/1.2 | 3/1.3 | 4/1.6 | -/1.2 | -/1.2 | -/1.2 |
| | Maximum load (kN) | 2.5 | 3.2 | 3.4 | 1.6 | 17 | 1.7 |
| | Maximum load point displacement (mm) | 8.8 | 11.0 | 9.3 | 9.0 | 8.6 | 5.5 |
| | Absorbed energy (J) | 10.9 | 13.0 | 13.3 | 9.8 | 9.5 | 6.7 |

1) PET: polyethyleneterephthalate, 2) PEN: polyethylenenaphthalate, 3) PA6: Nylon 6, 4) PC: polycarbonate 5) Twist count: For twisted yarn cord, each of first/second twist count is described since it is double twisted. For yarns constituting a woven fabric, single twist count is described since it is 6) Tensile strength test: Composite material obtained was tested by stretching in the fiber direction.

7) Drop impact test: In the case where the reinforcement material is twisted yarn cord or non-twisted yarn cord, the test specimen was prepared by laminating 3 plies of the composite material in the directions of 0˚, 90˚ and 0˚ and molding.

8) High speed punching: The test specimen was prepared by alternately laminating 3 to 12 plies of the composite material obtained in the directions of 0˚, 90˚, and so on and molding. Impact speed: 11 m/sec, striker diameter: 10 mm, opening diameter of holder: 40 mm.

Table 3

| Component, material, test item, etc | | Example 10 | Example 11 | Example 12 | Example 13 | Example 14 | Example 15 | Example 16 | Example 17 | Example 18 | Example 19 |
|---|---|---|---|---|---|---|---|---|---|---|---|
| Fiber | Organic fiber | PET[1] | PET[1] | PET[1] | PET[1] | PET[1] | PET[1] | PET[1] | PET[1] | PET[1] | PET[1] |
| | Fineness of original yarn (dtex) | 1100 | 1100 | 1100 | 1100 | 1100 | 1100 | 1100 | 1100 | 1100 | 1100 |
| | Form | Twisted yarn cord | Twisted yarn cord | Twisted yarn cord | Twisted yarn cord | Twisted yarn cord | Twisted yarn cord | Twisted yarn cord | Twisted yarn cord | Twisted yarn cord | Woven fabric |
| | Structure, composition, etc. | Double twist | Double twist | Double twist | Double twist | Double twist | Double twist | Double twist | Double twist | Double twist | Plain weave |
| | First/second twist count (T/m)[3] | 200/275 | 200/275 | 7/10 | 200/275 | 200/275 | 200/275 | 710/1000 | 200/275 | 200/275 | 120 |
| | Average interval between the cord (mm) | 1 0 | 3.0 | 10 | 1.0 | 1 0 | 10 | 1.0 | 10 | 1.0 | 14 |
| | Weight per unit area (g/m$^2$) | 230 | 77 | 230 | 230 | 230 | 230 | 230 | 230 | 230 | 175 |
| Resin | | PP[2] | PP[2] | PP[2] | PP[2] | PP[2] | PP[2] | PP[2] | PP[2] | PP[2] | PP[2] |

| Component, material, test item, etc | | Example 10 | Example 11 | Example 12 | Example 13 | Example 14 | Example 15 | Example 16 | Example 17 | Example 18 | Example 19 |
|---|---|---|---|---|---|---|---|---|---|---|---|
| Composite material | Volume fraction of fiber (%) | 10 | 10 | 52 | 52 | 52 | 52 | 52 | 74 | 85 | 51 |
| | Fiber weight per unit area per 10 mm thickness (g/m$^2$) | 1380 | 1380 | 7176 | 7176 | 7176 | 7176 | 7176 | 10212 | 11730 | 7038 |
| | Void ratio between fiber bundles (%) | 2 | 2 | 3 | 3 | 3 | 10 | 2 | 2 | 2 | 3 |
| | Degree of impregnation within fiber bundle (%) | 60 | 65 | 53 | 48 | 50 | 19 | 15 | 60 | 65 | 48 |
| | Thickness of 1 ply (mm) | 14 | 0.5 | 0.3 | 03 | 03 | 03 | 0.3 | 02 | 02 | 0.3 |
| Tensile strength test[4] | Strength (MPa) | 96 | 37 | 415 | 376 | 381 | 370 | 95 | 377 | 333 | 160 |
| | Elongation (%) | 40 | 44 | 18 | 45 | 42 | 39 | 32 | 37 | 28 | 29 |
| | Modulus of elasticity (GPa) | 2.0 | 2.0 | 2.1 | 2.3 | 22 | 2.3 | 2.2 | 2.5 | 2.5 | 22 |

(continued)

| Component, material, test item, etc | | Example 10 | Example 11 | Example 12 | Example 13 | Example 14 | Example 15 | Example 16 | Example 17 | Example 18 | Example 19 |
|---|---|---|---|---|---|---|---|---|---|---|---|
| Drop impact test[5] | The number of ply for test specimen/ thickness (mm) | 3/4.4 | 3/1.5 | 3/1.0 | 3/1.0 | 9/2.9 | 3/1.0 | 3/1.0 | 3/0.7 | 3/0.7 | 4/12 |
| | Maximum load (kN) | 49 | 45 | 6.0 | 6.1 | 60 | 61 | 5.8 | 6.1 | 61 | 60 |
| | Absorbed energy (J) | 43 | 40 | 45 | 45 | 45 | 45 | 44 | 45 | 45 | 45 |
| High speed punching test[6] | The number of ply for test specimen/ thickness (mm) | 3/4.4 | 3/1.5 | 3/10 | 3/10 | 9/29 | 3/1.0 | 3/1.0 | 3/0.7 | 3/0.7 | 4/12 |
| | Maximum load (kN) | 2.8 | 2.7 | 3.3 | 3.6 | 73 | 31 | 2.7 | 3.8 | 3.3 | 28 |
| | Maximum load point displacement (mm) | 8.8 | 84 | 12.8 | 13.0 | 123 | 108 | 9.0 | 13.0 | 125 | 99 |
| | Absorbed energy (J) | 11.5 | 11 0 | 15.4 | 16.2 | 32 1 | 130 | 11.1 | 16.5 | 147 | 123 |

1) PET: polyethyleneterephthalate, 2) PP: polypropylene 3) Twist count: For twisted yam cord, each of first/second twist count is described since it is double twisted. For yarns constituting a woven fabric, single twist count is described since it is single twisted.

4) Tensile strength test: Composite material obtained was tested by stretching in the fiber direction.

5) Drop impact test: In the case where the reinforcement material is twisted yarn cord or non-twisted yarn cord, the test specimen was prepared by laminating 3 plies of the composite material in the directions of 0˚, 90˚ and 0˚ and molding.

6) High speed punching: The test specimen was prepared by alternately laminating 3 to 12 plies of the composite material obtained in the directions of 0˚, 90˚, and so on and molding. Impact speed: 11 m/sec, striker diameter: 10 mm, opening diameter of holder: 40 mm.

Table 4

| Component, material, test item, etc. | | Example 20 | Example 21 | Example 22 | Example 23 | Example 24 | Example 25 | Example 26 | Example 27 | Example 28 | Example 29 |
|---|---|---|---|---|---|---|---|---|---|---|---|
| Fiber | Organic fiber | PET[1] | PET[1] | PET[1] | PET[1] | PET[1] | PET[1] | PET[1] | PEN[2] | PA66[3] | PET[1] |
| | Fineness of original yarn (dtex) | 1100 | 1100 | 1100 | 1100 | 1100 | 560 | 560 | 1100 | 940 | 1100 |
| | Form | Woven fabric | Woven fabric | Woven fabric | Woven fabric | Woven fabric | Knitted fabric | Knitted fabric | Twisted yarn cord | Twisted yarn cord | Twisted yarn cord |
| | Structure, composition, etc. | Plain weave | Plain weave | Plain weave | Plain weave | Plain weave | Raschel knit | Raschel knit | Double twist | Double twist | Double twist |
| | First/second twist count (T/m)[6] | 120 | 120 | 120 | 120 | 120 | 60 | 60 | 200/275 | 210/300 | 200/275 |
| | Average interval between the cord (mm) | 1.4 | 1 4 | 1.4 | 1.4 | 14 | 1 1 | 1.1 | 10 | 1.0 | 20 |
| | Weight per unit area (g/m$^2$) | 175 | 175 | 175 | 175 | 175 | 120 | 120 | 230 | 200 | 115 |
| Resin | | PP[4] | PP[4] | PP[4] | PP[4] | PP[4] | PP[4] | PP[4] | PP[4] | PP[4] | PA6[5] |

(continued)

| Component, material, test item, etc. | | Example 20 | Example 21 | Example 22 | Example 23 | Example 24 | Example 25 | Example 26 | Example 27 | Example 28 | Example 29 |
|---|---|---|---|---|---|---|---|---|---|---|---|
| Composite material | Volume fraction of fiber (%) | 51 | 51 | 51 | 68 | 81 | 49 | 74 | 52 | 51 | 35 |
| | Fiber weight per unit area per 10 mm thickness $(g/m^2)$ | 7038 | 7038 | 7038 | 9384 | 11178 | 6762 | 10212 | 7176 | 7038 | 4830 |
| | Void ratio between fiber bundles (%) | 2 | 3 | 9 | 3 | 3 | 3 | 3 | 2 | 2 | 2 |
| | Degree of impregnation within fiber bundle (%) | 52 | 12 | 8 | 47 | 45 | 55 | 48 | 54 | 55 | 56 |
| | Thickness of 1 ply (mm) | 03 | 03 | 03 | 02 | 0.2 | 0.2 | 0.2 | 03 | 03 | 03 |
| Tensile strength test[7] | Strength (MPa) | 158 | 155 | 153 | 150 | 138 | 124 | 117 | 383 | 333 | 185 |
| | Elongation (%) | 30 | 29 | 28 | 28 | 28 | 20 | 17 | 22 | 45 | 33 |
| | Modulus of elasticity (GPa) | 2.2 | 2.1 | 2.2 | 2.3 | 2.5 | 2 1 | 2.0 | 28 | 2.0 | 2.4 |

(continued)

| Component, material, test item, etc. | | Example 20 | Example 21 | Example 22 | Example 23 | Example 24 | Example 25 | Example 26 | Example 27 | Example 28 | Example 29 |
|---|---|---|---|---|---|---|---|---|---|---|---|
| Drop impact test[8] | The number of ply for test specimen/ thickness (mm) | 12/3.5 | 4/1.2 | 4/1 2 | 4/0.9 | 4/0.8 | 4/09 | 4/0.8 | 3/10 | 3/0.9 | 3/09 |
| | Maximum load (kN) | 6.1 | 6.0 | 60 | 60 | 60 | 5.5 | 53 | 5 1 | 6.0 | 59 |
| | Absorbed energy (J) | 45 | 45 | 45 | 45 | 45 | 44 | 43 | 43 | 45 | 45 |
| High speed punching test[9] | The number of ply for test specimen/ thickness (mm) | 12/35 | 4/1.2 | 4/1.2 | 4/09 | 4/08 | 4/0.9 | 4/0.8 | 3/1.0 | 3/0.9 | 3/0.9 |
| | Maximum load (kN) | 65 | 3 1 | 28 | 31 | 2.8 | 2.9 | 2.6 | 4.0 | 3.3 | 2.1 |
| | Maximum load point displacement (mm) | 8 8 | 108 | 9 1 | 11 5 | 10.7 | 92 | 9.1 | 12.3 | 130 | 90 |
| | Absorbed energy (J) | 28.8 | 13.0 | 11.5 | 13 8 | 12 6 | 120 | 11.4 | 16.0 | 15.4 | 102 |

1) PET: polyethyleneterephthalate, 2) PEN: polyethylenenaphthalate, 3) PA66, Nylon 66, 4) PP: polypropylene, 5) PA6: Nylon 6 6) Twist count: For twisted yarn cord, each of first/second twist count is described since it is double twisted. For yarns constituting a woven fabric, single twist count is described since it is single twisted.

7) Tensile strength test: Composite material obtained was tested by stretching in the fiber direction.

8) Drop impact test: In the case where the reinforcement material is twisted yarn cord or non-twisted yarn cord, the test specimen was prepared by laminating 3 plies of the composite material in the directions of 0˚, 90˚ and 0˚ and molding.

9) High speed punching: The test specimen was prepared by alternately laminating 3 to 12 plies of the composite material obtained in the directions of 0˚, 90˚, and so on and molding. Impact speed: 11 m/sec, striker diameter: 10 mm, opening diameter of holder: 40 mm.

Table 5

| Component, material, test item, etc. | | Example30 | Example31 | Example32 | Example33 | Example34 | Example35 | Example36 | Example37 | Exampl38 | Example39 |
|---|---|---|---|---|---|---|---|---|---|---|---|
| Fiber | Organic fiber | PET[1] | PET[1] | PET[1] | PET[1] | PET[1] | PET[1] | PET[1] | PET[1] | PEN[2] | PEN[2] |
| | Fineness of original yarn (dtex) | 1100 | 1100 | 1100 | 1100 | 1100 | 1100 | 1100 | 560 | 1100 | 1100 |
| | Form | Twisted yarn cord | Twisted yarn cord | Twisted yarn cord | Woven fabric | Woven fabric | Woven fabric | Woven fabric | Knitted fabric | Twisted yarn cord | Woven fabric |
| | Structure, composition, etc. | Double twist | Double twist | Double twist | Plain weave | Plain weave | Plain weave | Plain weave | Raschel knit | Double twist | Twill weave. |
| | First/second twist count (T/m)[4] | 200 275 | 200/275 | 200/275 | 120 | 120 | 120 | 120 | 60 | 200/275 | 30 |
| | Average interval between the cord (mm) | 10 | 10 | 10 | 14 | 14 | 1.4 | 14 | 11 | 10 | 0 7 |
| | Weight per unit area (g m$^2$) | 230 | 230 | 230 | 175 | 175 | 175 | 175 | 120 | 230 | 310 |
| Resin | | PA6[3] | PA6[3] | PA6[3] | PA6[3] | PA6[3] | PA6[3] | PA6[3] | PA6[3] | PA6[3] | PA6[3] |

| Component, material, test item, etc. | | Example30 | Example31 | Example32 | Example33 | Example34 | Example35 | Example36 | Example37 | Exampl38 | Example39 |
|---|---|---|---|---|---|---|---|---|---|---|---|
| Composite material | Volume fraction of fiber (%) | 49 | 49 | 69 | 30 | 50 | 50 | 72 | 47 | 49 | 50 |
| | Fiber weight per unit area per 10 mm thickness (g/m2) | 6762 | 6762 | 9522 | 4140 | 6900 | 6900 | 9936 | 6486 | 6762 | 6900 |
| | Void ratio between fiber bundles (%) | 3 | 3 | 3 | 2 | 3 | 2 | 3 | 2 | 3 | 3 |
| | Degree of impregnation within fiber bundle (%) | 49 | 9 | 50 | 52 | 56 | 15 | 57 | 53 | 52 | 55 |
| | Thickness of 1 ply (mm) | 0 3 | 0.3 | 0.2 | 0.3 | 0.3 | 0.3 | 0.3 | 0.2 | 0.3 | 0.4 |
| Tensile strength test[5] | Strength (MPa) | 366 | 360 | 341 | 152 | 154 | 159 | 151 | 120 | 388 | 186 |
| | Elongation (%) | 32 | 35 | 31 | 26 | 27 | 28 | 29 | 20 | 21 | 15 |
| | Modulus of elasticity (GPa) | 2.4 | 2.4 | 2.4 | 2.7 | 2.8 | 2.8 | 2.8 | 2.3 | 3.0 | 3.3 |

EP 2 505 603 A1

(continued)

| Component, material, test item, etc. | | Example30 | Example31 | Example32 | Example33 | Example34 | Example35 | Example36 | Example37 | Exampl38 | Example39 |
|---|---|---|---|---|---|---|---|---|---|---|---|
| Drop impact test[6] | The number of ply for test specimen/ thickness (mm) | 3/10 | 3/1.0 | 3/1 0 | 4/1 2 | 4/1 2 | 4/12 | 4/1 0 | 4/0 9 | 3/1 0 | 4/1 6 |
| | Maximum load (kN) | 6 0 | 5.8 | 5 8 | 5.6 | 5 9 | 6.1 | 6.0 | 5 0 | 5 0 | 5 2 |
| | Absorbed energy (J) | 45 | 44 | 44 | 44 | 45 | 45 | 45 | 43 | 43 | 43 |
| High speed punching test[7] | The number of ply for test specimen/ thickness (mm) | 3/1 0 | 3/1 0 | 3/1.0 | 4/1.2 | 4/1.2 | 4/1.2 | 4/1.0 | 4/0.9 | 3/1.0 | 4/1 6 |
| | Maximum load (kN) | 2.7 | 2.7 | 2.6 | 2.8 | 2.8 | 2 8 | 2.6 | 2.6 | 3 8 | 3 5 |
| | Maximum load point displacement (mm) | 8 6 | 8.8 | 9.1 | 8 6 | 9.1 | 9 5 | 9.4 | 8.8 | 10 5 | 9.5 |
| | Absorbed energy (J) | 10 8 | 11 1 | 11 4 | 11 4 | 11 9 | 13.1 | 12.1 | 10.0 | 14 3 | 13 6 |

1) PET: polyethyleneterephthalate, 2) PEN: polyethylenenaphthalate, 3) PA6: Nylon 6 4) Twist count: For twisted yarn cord, each of first/second twist count is described since it is double twisted. For yarns constituting a woven fabric, single twist count is described since it is single twisted.

5) Tensile strength test: Composite material obtained was tested by stretching in the fiber direction.

6) Drop impact test: In the case where the reinforcement material is twisted yarn cord or non-twisted yarn cord, the test specimen was prepared by laminating 3 plies of the composite material in the directions of 0˚, 90˚ and 0˚ and molding.

7) High speed punching: The test specimen was prepared by alternately laminating 3 to 12 plies of the composite material obtained in the directions of 0˚, 90˚, and so on and molding. Impact speed: 11 m/sec, striker diameter: 10 mm, opening diameter of holder: 40 mm.

**Table 6**

| Component, material, test item, etc | | Example 40 | Example 41 | Example 42 | Example 43 | Example 44 | Example 45 | Exampl46 | Example 47 | Example 48 | Example 49 |
|---|---|---|---|---|---|---|---|---|---|---|---|
| Fiber | Organic fiber | PA66[1] | PET[2] | PET[2] | PET[2] | PET[2] | PET[2] | PEN[3] | PEN[3] | PA66[1] | PEN[3] |
| | Fineness of original yarn (dtex) | 940 | 1100 | 1100 | 1100 | 1100 | 1100 | 1100 | 1100 | 940 | 1100 |
| | Form | Twisted yarn cord | Twisted yarn cord | Twisted yarn cord | Twisted yarn cord | Woven fabric | Woven fabric | Twisted yarn cord | Woven fabric | Twisted yarn cord | Twisted yarn cord |
| | Structure, composition, etc. | Double twist | Double twist | Double twist | Double twist | Plain weave | Plain weave | Double twist | Twill weave | Double twist | Double twist |
| | First/second twist count (T/m)[6] | 210/300 | 200/275 | 200/275 | 200/275 | 120 | 120 | 200/275 | 30 | 210/300 | 200/275 |
| | Average interval between the cord (mm) | 0.7 | 2 0 | 1 0 | 1.0 | 1 4 | 1.4 | 1.0 | 0.7 | 0 7 | 1 0 |
| | Weight per unit area (g/m$^2$) | 200 | 115 | 230 | 230 | 175 | 175 | 230 | 310 | 200 | 230 |
| Resin | | PA6[4] | PC[5] | PC[5] | PC[5] | PC[5] | PC[5] | PC[5] | PC[5] | PC[5] | PET[2] |

| Component, material, test item, etc | | Example 40 | Example 41 | Example 42 | Example 43 | Example 44 | Example 45 | Exampl46 | Example 47 | Example 48 | Example 49 |
|---|---|---|---|---|---|---|---|---|---|---|---|
| Composite material | Volume fraction of fiber (%) | 51 | 29 | 46 | 63 | 30 | 56 | 46 | 53 | 48 | 49 |
| | Fiber weight per unit area per 10 mm thickness ($g/m^2$) | 7038 | 4002 | 6348 | 8964 | 4140 | 7728 | 6348 | 7314 | 6624 | 6762 |
| | Void ratio between fiber bundles (%) | 3 | 2 | 2 | 2 | 2 | 2 | 2 | 3 | 2 | 2 |
| | Degree of impregnation within fiber bundle (%) | 60 | 48 | 47 | 45 | 50 | 48 | 49 | 52 | 47 | 57 |
| | Thickness of 1 ply (mm) | 0 3 | 0.3 | 04 | 0 3 | 0.4 | 0.3 | 0.4 | 04 | 04 | 0.3 |
| Tensile strength test[7] | Strength (MPa) | 340 | 171 | 345 | 333 | 164 | 161 | 392 | 191 | 348 | 385 |
| | Elongation (%) | 43 | 39 | 41 | 38 | 31 | 30 | 20 | 16 | 44 | 20 |
| | Modulus of elasticity (GPa) | 2.3 | 2 2 | 2.3 | 2.4 | 2.2 | 22 | 2.9 | 3 3 | 2 3 | 3 0 |

(continued)

| Component, material, test item, etc | | Example 40 | Example 41 | Example 42 | Example 43 | Example 44 | Example 45 | Exampl46 | Example 47 | Example 48 | Example 49 |
|---|---|---|---|---|---|---|---|---|---|---|---|
| Drop impact tes[8] | The number of ply for test specimen/ thickness (mm) | 3/1 0 | 3/0 9 | 3/1.1 | 3/1 0 | 4/1 4 | 4/1 3 | 3/1.1 | 4/1 5 | 3/1 0 | 3/1.0 |
| | Maximum load (kN) | 5 8 | 57 | 6.0 | 6 1 | 6 1 | 6 1 | 5.3 | 5.6 | 5.8 | 5 2 |
| | Absorbed energy (J) | 44 | 44 | 45 | 45 | 45 | 45 | 43 | 44 | 44 | 43 |
| High speed punching test[9] | The number of ply for test specimen/ thickness (mm) | 3/1.0 | 3/0 9 | 3/1 1 | 3/1 0 | 4/1 4 | 4/1.3 | 3/1.1 | 4/1.5 | 3/1.0 | 3/1 0 |
| | Maximum load (kN) | 3 1 | 3.0 | 3 3 | 3.1 | 2 9 | 3 0 | 3.9 | 3 5 | 3 2 | 3.5 |
| | Maximum load point displacement (mm) | 11 0 | 10 8 | 11 3 | 11 3 | 9 0 | 9.5 | 10 5 | 9.7 | 11 5 | 10 0 |
| | Absorbed energy (J) | 13.7 | 12 3 | 13 8 | 13.4 | 11.4 | 12 0 | 14.7 | 13 9 | 14.7 | 14.0 |

1) PA66: Nylon 66, 2) PET: polyethyleneterephthalate, 3) PEN: polyethylenenaphthalate, 4) PA6: Nylon 6, 5) PC: polycarbonate 6) Twist count: For twisted yarn cord, each of first/second twist count is described since it is double twisted. For yarns constituting a woven fabric, single twist count is described since it is single twisted.

7) Tensile srength test: Composite material obtained was tested by stretching in the fiber direction.

8) Drop impact test: In the case where the reinforcement material is twisted yarn cord or non-twisted yarn cord, the test specimen was prepared by laminating 3 plies of the composite material in the directions of 0˚, 90˚ and 0˚ and molding.

9) High speed punching: The test specimen was prepared by alternately laminating 3 to 12 plies of the composite material obtained in the directions of 0˚, 90˚, and so on and molding. Impact speed: 11 m/sec, striker diameter: 10 mm, opening diameter of holder: 40 mm.

Table 7

| Component, material, test item, etc. | | Example 50 | Example 51 | Comparative Example 6 | Comparative Example 7 | Comparative Example 8 | Comparative Example 9 |
|---|---|---|---|---|---|---|---|
| Fiber | Organic fiber | PEN[1] | High-Tm PEN[2] | PET[3] | PET[3] | PET[3] | None |
| | Fineness of original yarn (dtex) | 1100 | 1100 | 1100 | 1100 | 1100 | - |
| | Form | Woven fabric | Twisted yarn cord | Non-twisted yarn cord | Twisted yarn cord | Twisted yarn cord | - |
| | Structure, composition, etc. | Twill weave: | Double twist | two-ply yarn | Double twist | Double twist | - |
| | First/second twist count (T/m)[5] | 30 | 200/275 | 0 | 965/1365 | 200/275 | - |
| | Average interval between the cord (mm) | 0.7 | 1.0 | 1.0 | 1.0 | 10.0 | - |
| | Weight per unit area (g/m$^2$) | 310 | 230 | 220 | 240 | 23 | - |
| Resin | | PET[3] | PEN[1] | PP[4] | PP[4] | PP[4] | PEN[1] |
| Composite material | Volume fraction of fiber (%) | 50 | 49 | 50 | 49 | 5 | 0 |
| | Fiber weight per unit area per 10 mm thickness (g/m$^2$) | 6900 | 6762 | 6900 | 6762 | 690 | - |
| | Void ratio between fiber bundles (%) | 2 | 2 | 2 | 2 | 2 | - |
| | Degree of impregnation within fiber bundle (%) | 55 | 59 | 98 | 10 | 60 | - |
| | Thickness of 1 ply (mm) | 0.4 | 0.3 | 0.3 | 0.4 | 0.4 | - |
| Tensile strength test[6] | Strength (MPa) | 185 | 357 | 296 | 50 | 35 | 70 |
| | Elongation (%) | 15 | 14 | 16 | 34 | 41 | 4 |
| | Modulus of elasticity (GPa) | 3.2 | 2.8 | 2.0 | 2.0 | 2.0 | 2.8 |

EP 2 505 603 A1

49

| Component, material, test item, etc. | | Example 50 | Example 51 | Comparative Example 6 | Comparative Example 7 | Comparative Example 8 | Comparative Example 9 |
|---|---|---|---|---|---|---|---|
| Drop impact test[7] | The number of ply for test specimen/ thickness (mm) | 4/1.6 | 3/1.0 | 3/1.0 | 3/1.1 | 3/1.2 | -/1.2 |
| | Maximum load (kN) | 5.3 | 5.0 | 3.8 | 5.0 | 1.0 | 2.6 |
| | Absorbed energy (J) | 43 | 43 | 34 | 43 | 11 | 23 |
| High speed punching test[8] | The number of ply for test specimen/ thickness (mm) | 4/1.6 | 3/1.0 | 3/1 0 | 3/1.1 | 3/1 2 | -/1.2 |
| | Maximum load (kN) | 3.4 | 3 0 | 2.0 | 2.2 | 0.7 | 1.7 |
| | Maximum load point displacement (mm) | 9.3 | 8.2 | 8.1 | 8.4 | 10.1 | 4.8 |
| | Absorbed energy (J) | 13.3 | 10.9 | 9.0 | 9.7 | 5.5 | 5 9 |

1) PEN: polyethylenenaphthalate, 2) High Tm-PEN: polyethylenenaphthalate with melting point of 280˚C or higher, 3) PET: polyethyleneterephthalate, 4) PP: polypropylene
5) Twist count: For twisted yarn cord, each of first/second twist count is described since it is double twisted. For yarns constituting a woven fabric, single twist count is described since it is single twisted.
6) Tensile strength test: Composite material obtained was tested by stretching in the fiber direction.
7) Drop impact test: In the case where the reinforcement material is twisted yarn cord or non-twisted yarn cord, the test specimen was prepared by laminating 3 plies of the composite material in the directions of 0˚, 90˚ and 0˚ and molding.
8) High speed punching: The test specimen was prepared by alternately laminating 3 to 12 plies of the composite material obtained in the directions of 0˚, 90˚, and so on and molding. Impact speed: 11 m/sec, striker diameter: 10 mm, opening diameter of holder: 40 mm.

EP 2 505 603 A1

Table 8

| Component, material, test item, etc. | | Example 52 | Example 53 | Example 54 | Example 55 | Example 56 |
|---|---|---|---|---|---|---|
| Fiber | Organic fiber | PET[1] | PET[1] | PET[1] | PET[1] | PET[1] |
| | Fineness of original yarn (dtex) | 1100 | 1100 | 1100 | 560 | 1100 |
| | Form | Twisted yarn cord | Twisted yarn cord | Woven fabric | Knitted fabric | Twisted yarn cord |
| | Structure, composition, etc. | Double twist | Double twist | Plain weave | Raschel knit | Double twist |
| | First/second twist count (T/m)[4] | 200/275 | 200'275 | 120 | 60 | 200/275 |
| | Average interval between the cord (mm) | 1.0 | 1.0 | 1.4 | 1.1 | 1.0 |
| | Weight per unit area (g/m$^2$) | 230 | 230 | 175 | 120 | 230 |
| Resin | | PA6[2] | PA6[2] | PA6[2] | PA6[2] | PP[3] |
| Composite material | Volume fraction of fiber (%) | 40 | 40 | 40 | 40 | 40 |
| | Fiber weight per unit area per 10 mm thickness (g/m$^2$) | 5520 | 5520 | 5520 | 5520 | 5520 |
| | Void ratio between fiber bundles (%) | 2 | 2 | 2 | 2 | 2 |
| | Degree of impregnation within fiber bundle (%) | 30 | 95 | 30 | 30 | 30 |
| | Thickness of 1 ply (mm) | 0.3 | 0.3 | 0.3 | 0.3 | 0.3 |
| Tensile strength test[5] | Strength (MPa) | 342 | 337 | 171 | 157 | 338 |
| | Elongation (%) | 32 | 30 | 30 | 21 | 41 |
| | Modulus of elasticity (GPa) | 2.3 | 2.2 | 2.0 | 2.0 | 2.2 |

(continued)

| Component, material, test item, etc. | | Example 52 | Example 53 | Example 54 | Example 55 | Example 56 |
|---|---|---|---|---|---|---|
| Drop impact test[6] | The number of ply for test specimen/ thickness (mm) | 3/1.0 | 3/1.0 | 4/1.2 | 4/1.1 | 3/1.0 |
| | Maximum load (kN) | 6.0 | 5.3 | 5.8 | 5.5 | 5.8 |
| | Absorbed energy (J) | 45 | 43 | 45 | 44 | 45 |
| High speed punching test[7] | The number of ply for test specimen/ thickness (mm) | 3/1 0 | 3/1.0 | 4/1.2 | 4/1.1 | 3/1.0 |
| | Maximum load (kN) | 2.5 | 2.5 | 2.7 | 2.6 | 3.5 |
| | Maximum load point displacement (mm) | 8.8 | 8.5 | 8.6 | 8.8 | 12.8 |
| | Absorbed energy (J) | 10.8 | 10.5 | 10.9 | 10.1 | 15.8 |

1) PET: polyethyleneterephthalate, 2) PA6: Nylon 6, 3) PP: polypropylene 4) Twist count: For twisted yarn cord, each of first/second twist count is described since it is double twisted. For yarns constituting a woven fabric, single twist count is described since it is single twisted.

5) Tensile strength test: Composite material obtained was tested by stretching in the fiber direction.

6) Drop impact test: In the case that the reinforcement material is twisted yarn cord or non-twisted yarn cord, the test specimen was prepared by laminating 3 plies of the composite material in the directions of 0˚, 90˚ and 0˚ and molding.

7) High speed punching: The test specimen was prepared by alternately laminating 3 to 12 plies of the composite material obtained in the directions of 0˚, 90˚, and so on and molding. Impact speed: 11 m/sec, striker diameter: 10 mm, opening diameter of holder: 40 mm.

Table 9

| Component, material, test item, etc. | | Reference Example 1 | Reference Example 2 | Reference Example 3 | Reference Example 4 | Reference Example 5 | Reference Example 6 | Reference Example 7 | Reference Example 8 |
|---|---|---|---|---|---|---|---|---|---|
| Reinforced fiber | Type of fiber | Carbon fiber | Carbon fiber | Carbon fiber | Carbon fiber | Carbon fiber | Carbon fiber | Glass fiber | Aramid fiber |
| | Fineness (dtex) | 16000 | 16000 | 16000 | 16000 | 16000 | 16000 | 24000 | 16700 |
| | Form | Filament | Filament | Filament | Staple 10 mm | Woven fabric | Filament | Filament | Filament |
| | Weight per unit area (g/m$^2$) | 200 | 200 | 200 | 200 | 200 | 200 | 200 | 200 |
| Resin | | PA6[1] | PA6[1] | PA6[1] | PA6[1] | PA6[1] | PP[2] | PA6[1] | PA6[1] |
| High stiffness material | Volume fraction of fiber (%) | 50 | 40 | 50 | 50 | 50 | 50 | 50 | 50 |
| | Degree of resin impregnation (%) | 99 | 99 | 92 | 99 | 99 | 99 | 99 | 99 |
| | Thickness (mm) | 0.5 | 0.5 | 0.5 | 0.5 | 0.5 | 0.5 | 0.5 | 0.5 |
| Tensile strength test | Strength (MPa) | 1673 | 1406 | 1533 | 335 | 868 | 1591 | 867 | 1656 |
| | Modulus of elasticity (GPa) | 113 | 92 | 99 | 32 | 65 | 108 | 37 | 37 |
| Compression test | Strength (MPa) | 532 | 459 | 495 | 231 | 303 | 481 | 477 | 113 |
| | Modulus of elasticity (GPa) | 97 | 77 | 85 | 24 | 52 | 90 | 52 | 8 |
| Drop impact test | Maximum load (kN) | 1.4 | 1.1 | 1.2 | 1.5 | 1.3 | 1.7 | 1.1 | 4.4 |
| | Absorbed energy (J) | 10 | 8 | 9 | 10 | 9 | 11 | 8 | 38 |

(continued)

| Component, material, test item, etc. | | Reference Example 1 | Reference Example 2 | Reference Example 3 | Reference Example 4 | Reference Example 5 | Reference Example 6 | Reference Example 7 | Reference Example 8 |
|---|---|---|---|---|---|---|---|---|---|
| High speed punching | Maximum load (kN) | 0.4 | 0.5 | 0.4 | 0.5 | 0.4 | 0.8 | 0.3 | 1.2 |
| | Maximum displacement (mm) | 3.3 | 3.8 | 3.6 | 3.8 | 3.2 | 4.3 | 3.0 | 8.8 |
| | Absorbed energy (J) | 1.5 | 1.8 | 1.6 | 1.8 | 1.4 | 3.2 | 0.9 | 7.0 |
| 1) PA6: Nylon 6, 2) PP: polypropylene | | | | | | | | | |

Table 10

| Component, material, test etc. | | Reference Example 9 | Reference Example 10 | Reference Example 12 | Reference Example 13 | Reference Example 14 | Reference Example 15 | Reference Example 16 | Reference Example 17 | Reference Example 17 |
|---|---|---|---|---|---|---|---|---|---|---|
| Reinforced fiber | Type of fiber | Carbon fiber | Carbon fiber | Carbon fiber | Carbon fiber | Carbon fiber | Carbon fiber | Carbon fiber | Carbon fiber | Carbon fiber |
| | Fineness (dtex) | 16000 | 16000 | 16000 | 16000 | 16000 | 16000 | 16000 | 16000 | 16000 |
| | Form | Filament | Filament | Filament | Filament | Woven fabric | Staple 20mm | Staple 20mm | Staple 20mm | Staple 20mm |
| | Weight per unit area (g/m²) | 200 | 200 | 200 | 200 | 200 | 200 | 200 | 200 | 200 |
| Resin | | PP¹⁾ | PP¹⁾ | PP¹⁾ | PP¹⁾ | PP¹⁾ | PP¹⁾ | PP¹⁾ | PP¹⁾ | PP¹⁾ |
| High stiffness material | Volume fraction of fiber (%) | 31 | 31 | 31 | 19 | 31 | 40 | 30 | 30 | 20 |
| | Degree of resin impregnation (%) | 99 | 91 | 99 | 99 | 99 | 99 | 92 | 99 | 99 |
| | Thickness (mm) | 1.5 | 1.5 | 5.0 | 1.0 | 1.5 | 1.5 | 1.5 | 5.0 | 0.5 |
| Tensile strength test | Strength (MPa) | 1155 | 1087 | 1184 | 822 | 677 | 333 | 266 | 286 | 212 |
| | Modulus of elasticity (GPa) | 75 | 73 | 75 | 60 | 67 | 31 | 23 | 26 | 17 |
| Compression test | Strength (MPa) | 393 | 355 | 400 | 276 | 241 | 340 | 263 | 299 | 213 |
| | Modulus of elasticity (GPa) | 62 | 59 | 63 | 40 | 50 | 32 | 24 | 26 | 16 |

(continued)

| Component, material, test etc. | | Reference Example 9 | Reference Example 10 | Reference Example 12 | Reference Example 13 | Reference Example 14 | Reference Example 15 | Reference Example 16 | Reference Example 17 | Reference Example 17 |
|---|---|---|---|---|---|---|---|---|---|---|
| Drop impact test | Maximum load (kN) | 2.0 | 1.8 | 5.4 | 1.5 | 1.7 | 1.5 | 1.2 | 4.0 | 0.8 |
| | Absorbed energy (J) | 13 | 11 | 30 | 9 | 11 | 10 | 8 | 23 | 6 |
| High speed punching | Maximum load (kN) | 0.9 | 0.8 | 2.0 | 0.7 | 0.9 | 1.2 | 0.8 | 1.6 | 0.4 |
| | Maximum displacement (mm) | 3.9 | 3.7 | 4.3 | 3.8 | 3.4 | 3.8 | 3.7 | 3.9 | 3.8 |
| | Absorbed energy (J) | 2.9 | 2.5 | 7.0 | 2.8 | 2.6 | 3.3 | 2.5 | 5.5 | 1.9 |
| 1) PP: polypropylene | | | | | | | | | | |

Table 11

| Component, material, test item, etc. | | Reference Example 18 | Reference Example 19 | Reference Example 20 | Reference Example 21 | Reference Example 22 | Reference Example 23 | Reference Example 24 | Reference Example 25 | Reference Example 26 |
|---|---|---|---|---|---|---|---|---|---|---|
| Reinforced fiber | Type of fiber | Carbon fiber | Carbon fiber | Carbon fiber | Carbon fiber | Glass fiber | Aramid fiber | Carbon fiber | Carbon fiber | Carbon fiber |
| | Fineness (dtex) | 16000 | 8000[1] | 16000 | 16000 | 24000 | 16700 | 16000 | 16000 | 16000 |
| | Form | Staple 20 mm | Staple 20 mm | Staple 50 mm | Staple 5 mm | Filament | Filament | Filament | Filament | Woven fabric |
| | Weight per unit area (g/m$^2$) | 100 | 200 | 200 | 200 | 200 | 200 | 200 | 200 | 200 |
| Resin | | PP[2] | PP[2] | PP[2] | PP[2] | PP[2] | PP[2] | PA6[3] | PA6[3] | PA6[3] |
| High stiffness material | Volume fraction of fiber (%) | 30 | 30 | 30 | 30 | 30 | 30 | 50 | 19 | 31 |
| | Degree of resin impregnation (%) | 99 | 99 | 99 | 99 | 99 | 99 | 99 | 99 | 99 |
| | Thickness (mm) | 0.8 | 1.5 | 1.5 | 1.5 | 1.5 | 1.5 | 5.0 | 1.0 | 1.5 |
| Tensile strength test | Strength (MPa) | 284 | 280 | 281 | 265 | 485 | 913 | 1669 | 837 | 680 |
| | Modulus of elasticity (GPa) | 25 | 25 | 25 | 25 | 22 | 22 | 113 | 61 | 69 |
| Compression test | Strength (MPa) | 295 | 295 | 292 | 290 | 275 | 61 | 530 | 278 | 245 |
| | Modulus of elasticity (GPa) | 25 | 25 | 25 | 25 | 29 | 5 | 96 | 40 | 51 |

EP 2 505 603 A1

57

(continued)

| Component, material, test item, etc. | | Reference Example 18 | Reference Example 19 | Reference Example 20 | Reference Example 21 | Reference Example 22 | Reference Example 23 | Reference Example 24 | Reference Example 25 | Reference Example 26 |
|---|---|---|---|---|---|---|---|---|---|---|
| Drop impact test | Maximum load (kN) | 1.2 | 1.2 | 1.2 | 1.0 | 0.8 | 6.1 | 4.5 | 1.2 | 1.3 |
| | Absorbed energy (J) | 8 | 8 | 8 | 7 | 5 | 45 | 26 | 8 | 9 |
| High speed punching | Maximum load (kN) | 0.7 | 1.0 | 1.0 | 0.9 | 0.3 | 1.7 | 1.9 | 0.5 | 0.6 |
| | Maximum displacement (mm) | 3.9 | 3.9 | 3.7 | 3.5 | 3.0 | 4.8 | 3.6 | 3.5 | 3.2 |
| | Absorbed energy (J) | 2.5 | 3.2 | 3.1 | 2.6 | 1.0 | 10.5 | 5.9 | 1.6 | 1.5 |

1) Carbon fiber with fineness of 8,000 dtex is HTS40 12K made by Toho Tenax. Others with fineness of 16,000 dtex are STS40 24K made by Toho Tenax.
2) PP: polypropylene, 3) PA6: Nylon 6

Table 12

| Component, material, test item, etc. | | Reference Example 27 | Reference Example 28 | Reference Example 29 | Reference Example 30 | Reference Example 31 | Reference Example 32 | Reference Example 33 | Reference Example 34 | Reference Example 35 |
|---|---|---|---|---|---|---|---|---|---|---|
| Reinforced fiber | Type of fiber | Carbon fiber | Carbon fiber | Carbon fiber | Carbon fiber | Carbon fiber | Carbon fiber | Carbon fiber | Carbon fiber | Carbon fiber |
| | Fineness (dtex) | 16000 | 16000 | 16000 | 16000 | 8000[1] | 16000 | 16000 | 16000 | 16000 |
| | Form | Staple 20 mm | Staple 20 mm | Staple 20 mm | Staple 20 mm | Staple 20 mm | Staple 50 mm | Staple 5 mm | Filament | Staple 20 mm |
| | Weight per unit area (g/m$^2$) | 200 | 200 | 200 | 100 | 200 | 200 | 200 | 200 | 200 |
| Resin | | PA6[2] | PA6[2] | PA6[2] | PA6[2] | PA6[2] | PA6[2] | PA6[2] | PC[3] | PC[3] |
| High stiffness material | Volume fraction of fiber (%) | 30 | 30 | 20 | 30 | 30 | 30 | 30 | 30 | 30 |
| | Degree of resin impregnation (%) | 90 | 99 | 99 | 99 | 99 | 99 | 99 | 99 | 99 |
| | Thickness (mm) | 1.5 | 5.0 | 0.5 | 0.8 | 1.5 | 1.5 | 1.5 | 1.5 | 1.5 |
| Tensile strength test | Strength (MPa) | 250 | 276 | 220 | 280 | 276 | 278 | 245 | 1193 | 286 |
| | Modulus of elasticity (GPa) | 24 | 25 | 18 | 25 | 25 | 25 | 24 | 75 | 25 |
| Compression test | Strength (MPa) | 243 | 268 | 215 | 271 | 266 | 269 | 265 | 395 | 295 |
| | Modulus of elasticity (GPa) | 24 | 25 | 18 | 25 | 25 | 25 | 25 | 63 | 24 |

(continued)

| Component, material, test item, etc. | | Reference Example 27 | Reference Example 28 | Reference Example 29 | Reference Example 30 | Reference Example 31 | Reference Example 32 | Reference Example 33 | Reference Example 34 | Reference Example 35 |
|---|---|---|---|---|---|---|---|---|---|---|
| Drop impact test | Maximum load (kN) | 1.0 | 3.5 | 0.8 | 0.9 | 1.0 | 1.0 | 0.9 | 2.0 | 1.4 |
| | Absorbed energy (J) | 7 7 | 20 | 6 | 7 | 7 | 7 | 7 | 20 | 17 |
| High speed punching | Maximum load (kN) | 0.6 | 1.4 | 0.4 | 0.6 | 0.9 | 0.9 | 0.8 | 1.2 | 0.9 |
| | Maximum displacement (mm) | 3.4 | 3.6 | 3.3 | 3.5 | 3.4 | 3.4 | 3.4 | 8.8 | 9.0 |
| | Absorbed energy (J) | 1.6 | 5.0 | 1.4 | 1.8 | 2.4 | 2.4 | 2.2 | 9.3 | 9.4 |

1) Carbon fiber with fineness of 8,000 dtex is HTS40 12K made by Toho Tenax. Others with fineness of 16,000 dtex are STS40 24K made by Toho Tenax.
2) PA6: Nylon 6, 3) PC: polycarbonate

Table 13

| Component, material, test item, etc. | | Reference Example 36 | Reference Example 37 | Reference Example 38 | Reference Example 39 |
|---|---|---|---|---|---|
| Reinforced fiber | Type of fiber | Carbon fiber | Carbon fiber | Carbon fiber | Carbon fiber |
| | Fineness (dtex) | 16000 | 16000 | 16000 | 8000[1] |
| | Form | Filament | Staple 20 mm | Filament | Staple 20 mm |
| | Weight per unit area (g/m$^2$) | 200 | 200 | 200 | 200 |
| Resin | | PET[2] | PET[2] | PEN[3] | PEN[3] |
| High stiffness material | Volume fraction of fiber (%) | 30 | 30 | 30 | 30 |
| | Degree of resin impregnation (%) | 99 | 99 | 99 | 99 |
| | Thickness (mm) | 1.5 | 1.5 | 1.5 | 1.5 |
| Tensile strength test | Strength (MPa) | 1180 | 312 | 1178 | 310 |
| | Modulus of elasticity (GPa) | 80 | 28 | 84 | 31 |
| Compression test | Strength (MPa) | 404 | 298 | 400 | 300 |
| | Modulus of elasticity (GPa) | 65 | . 27 | 65 | 29 |
| Drop impact test | Maximum load (kN) | 2.0 | 1.5 | 2.2 | 1.6 |
| | Absorbed energy (J) | 13 | 10 | 14 | 12 |
| High speed punching | Maximum load (kN) | 0.9 | 0.8 | 1.0 | 1.0 |
| | Maximum displacement (mm) | 3.5 | 3.7 | 3.5 | 3.5 |
| | Absorbed energy (J) | 2.7 | 2.6 | 2.8 | 2.8 |

1) Carbon fiber with fineness of 8,000 dtex is HTS40 12K made by Toho Tenax. Others with fineness of 16,000 dtex are STS40 24K made by Toho Tenax.
2) PET: polyethyleneterephthalate, 3) PEN: polyethylenenaphthalate

Table 14

| Component, material, test item, etc. | | Example 57 | Example 58 | Example 59 | Example 60 | Comparative Example 10 | Comparative Example 11 |
|---|---|---|---|---|---|---|---|
| Construction | Skin material type | Reference Example 1 | Reference Example 1 | Reference Example 1 | Reference Example 1 | Reference Example 1 | Reference Example 1 |
| | Volume fraction of skin material (%) | 50 | 50 | 50 | 50 | 50 | 50 |
| | Core material type | Example 52 | Example 53 | Example 54 | Example 55 | Reference Example 1 | PA6[1] |
| | Volume fraction of core material (%) | 50 | 50 | 50 | 50 | 50 | 50 |
| | Total thickness (mm) | 2.0 | 2.0 | 2.0 | 2.0 | 2.0 | 2.0 |
| Tensile strength test | Tensile strength (MPa) | 850 | 853 | 847 | 847 | 835 | 839 |
| | Tensile modulus of elasticity (GPa) | 58 | 59 | 57 | 57 | 57 | 55 |
| Compression test | Compression strength (MPa) | 285 | 285 | 284 | 284 | 265 | 268 |
| | Compression modulus (GPa) | 51 | 50 | 50 | 50 | 48 | 45 |
| Drop impact test | Maximum load (kN) | 5.4 | 4.8 | 5.3 | 5.2 | 1.5 | 1.2 |
| | Absorbed energy (J) | 43 | 40 | 43 | 42 | 10 | 9 |

(continued)

| Component, material, test item, etc. | | Example 57 | Example 58 | Example 59 | Example 60 | Comparative Example 10 | Comparative Example 11 |
|---|---|---|---|---|---|---|---|
| High speed punching | Maximum load (kN) | 2.6 | 2.5 | 2.6 | 2.5 | 0.7 | 1.1 |
| | Maximum load point displacement (mm) | 9.1 | 8.8 | 8.9 | 8.5 | 3.2 | 3.4 |
| | Absorbed energy (J) | 11.8 | 11.0 | 11.5 | 10.5 | 1.8 | 2.5 |
| 1) PA6: Nylon 6 | | | | | | | |

Table 15

| Component, material, test item, etc. | | Example 61 | Example 62 | Example 63 | Example 64 | Example 65 | Example 66 |
|---|---|---|---|---|---|---|---|
| Construction | Skin material type | Example 52 | PA6[1] | Reference Example 2 | Reference Example 3 | Reference Example 4 | Reference Example 5 |
| | Volume fraction of skin material (%) | 50 | 50 | 50 | 50 | 50 | 50 |
| | Core material type | Example 52 | Example 52 | Example 52 | Example 52 | Example 52 | Example 52 |
| | Volume fraction of core material (%) | 50 | 50 | 50 | 50 | 50 | 50 |
| | Total thickness (mm) | 2.0 | 2.0 | 2.0 | 2.0 | 2.0 | 2.0 |
| Tensile strength test | Tensile strength (MPa) | 321 | 165 | 714 | 775 | 420 | 482 |
| | Tensile modulus of elasticity (GPa) | 2.2 | 2.2 | 47 | 53 | 32 | 34 |
| Compression test | Compression strength (MPa) | 45 | 37 | 233 | 250 | 149 | 153 |
| | Compression modulus (GPa) | 2.8 | 2.5 | 40 | 44 | 27 | 27 |
| Drop impact test | Maximum load (kN) | 6.0 | 5.5 | 5.5 | 5.5 | 5.6 | 5.4 |
| | Absorbed energy (J) | 45 | 43 | 43 | 43 | 44 | 43 |
| High speed punching | Maximum load (kN) | 3.5 | 2.7 | 2.5 | 2.5 | 2.5 | 2.6 |
| | Maximum load point displacement (mm) | 9.0 | 8.7 | 9.0 | 8.8 | 8.8 | 8.5 |
| | Absorbed energy (J) | 13.0 | 11.1 | 11.5 | 11.0 | 11.1 | 10.6 |
| 1) PA6: Nylon 6 | | | | | | | |

Table 16

| Component, material, test item, etc. | | Example 67 | Comparative Example 12 | Example 68 | Comparative Example 13 | Example 69 |
|---|---|---|---|---|---|---|
| Construction | Skin material type | Reference Example 6 | Reference Example 6 | Example 56 | Reference Example 6 | PP[1] |
| | Volume fraction of skin material (%) | 50 | 50 | 50 | 50 | 50 |
| | Core material type | Example 56 | Reference Example 6 | Example 56 | PP1) | Example 56 |
| | Volume fraction of core material (%) | 50 | 50 | 50 | 50 | 50 |
| | Total thickness (mm) | 2.0 | 2.0 | 2.0 | 2.0 | 2.0 |
| Tensile strength test | Tensile strength (MPa) | 807 | 790 | 323 | 793 | 167 |
| | Tensile modulus of elasticity (GPa) | 55 | 53 | 2.2 | 51 | 2.1 |
| Compression test | Compression strength (MPa) | 275 | 270 | 40 | 263 | 34 |
| | Compression modulus (GPa) | 49 | 49 | 2.4 | 48 | 2.3 |
| Drop impact test | Maximum load (kN) | 5.3 | 1.7 | 5.8 | 1.5 | 5.4 |
| | Absorbed energy (J) | 43 | 11 | 45 | 10 | 43 |
| High speed punching | Maximum load (kN) | 3.3 | 0.6 | 5.5 | 0.7 | 4.0 |
| | Maximum load point displacement (mm) | 12.5 | 3.5 | 10.0 | 3.6 | 12.0 |
| | Absorbed energy (J) | 14.6 | 2.0 | 29.5 | 2.3 | 15.0 |
| 1) PP: polypropylene | | | | | | |

Table 17

| Component, material, test item, etc. | | Example 70 | Reference Example 14 | Reference Example 15 | Example 71 | Reference Example 16 | Reference Example 17 |
|---|---|---|---|---|---|---|---|
| Construction | Skin material type | Reference Example 7 | Reference Example 7 | Reference Example 7 | Reference Example 8 | Reference Example 8 | Reference Example 8 |
| | Volume fraction of skin material (%) | 50 | 50 | 50 | 50 | 50 | 50 |
| | Core material type | Example 52 | Reference Example 7 | PA6[1] | Example 52 | Reference Example 8 | PA6[1] |
| | Volume fraction of core material (%) | 50 | 50 | 50 | 50 | 50 | 50 |
| | Total thickness (mm) | 2.0 | 2.0 | 2.0 | 2.0 | 2.0 | 2.0 |
| Tensile strength test | Tensile strength (MPa) | 441 | 437 | 435 | 583 | 720 | 575 |
| | Tensile modulus of elasticity (GPa) | 20 | 18 | 19 | 34 | 42 | 33 |
| Compression test | Compression strength (MPa) | 239 | 240 | 233 | 68 | 77 | 69 |
| | Compression modulus (GPa) | 26 | 27 | 25 | 5 | 8 | 5 |
| Drop impact test | Maximum load (kN) | 5.4 | 1.2 | 1.1 | 6.0 | 4.7 | 4.4 |
| | Absorbed energy (J) | 43 | 8 | 8 | 45 | 39 | 38 |
| High speed punching | Maximum load (kN) | 2.4 | 0.5 | 0.7 | 3.8 | 3.8 | 3.0 |
| | Maximum load point displacement (mm) | 8.8 | 2.8 | 3.0 | 8.8 | 5.5 | 5.0 |
| | Absorbed energy (J) | 11.0 | 1.5 | 1.7 | 13.0 | 9.1 | 7.1 |

1) PA6: Nylon 6

Table 18

| Component, material, test item, etc. | | Example 72 | Comparative Example 18 . | Example 73 | Comparative Example 19 | Example 74 | Comparative Example 20 |
|---|---|---|---|---|---|---|---|
| Construction | Skin material type | Reference Example 35 | Reference Example 35 | Reference Example 37 | Reference Example 37 | Reference Example 39 | Reference Example 39 |
| | Volume fraction of skin material (%) | 50 | 50 | 50 | 50 | 50 | 50 |
| | Core material type | Example 42 | PC[1] | Example 49 | PET[2] | Example 51 | PEN[3] |
| | Volume fraction of core material (%) | 50 | 50 | 50 | 50 | 50 | 50 |
| | Total thickness (mm) | 4.0 | 4.0 | 4.0 | 4.0 | 4.0 | 4.0 |
| Tensile strength test | Tensile strength (MPa) | 304 | 220 | 335 | 230 | 318 | 232 |
| | Tensile modulus of elasticity (GPa) | 20 | 19 | 22 | 20 | 24 | 23 |
| Compression test | Compression strength (MPa) | 225 | 227 | 223 | 217 | 230 | 228 |
| | Compression modulus (GPa) | 19 | 18 | 20 | 19 | 22 | 22 |
| Drop impact test | Maximum load (kN) | 6.1 | 2.5 | 5.8 | 2.2 | 6.0 | 2.3 |
| | Absorbed energy (J) | 45 | 24 | 45 | 13 | 45 | 14 |
| High speed punching | Maximum load (kN) | 7.3 | 1.5 | 7.1 | 1.5 | 7.0 | 1.5 |
| | Maximum load point displacement (mm) | 11.0 | 8.6 | 10.1 | 4.0 | 8.5 | 4.0 |
| | Absorbed energy (J) | 34.3 | 9.8 | 32.5 | 5.5 | 30.0 | 5.4 |
| 1) PC: polycarbonate, 2) PET: polyethyleneterephthalate, 3) PEN: polyethylenenaphthalate | | | | | | | |

**Claims**

1. A composite material comprising an organic filament having a melting point of 200˚C or higher and a thermoplastic resin, the organic filament being in the form of a twisted yarn cord or a woven or knitted fabric composed of twisted yarn cord.

2. The composite material according to claim 1, wherein the melting point of the organic filament is 250˚C or higher.

3. The composite material according to claim 1, wherein the organic filament is multifilament and the thermoplastic resin is substantially impregnated between the fiber bundles.

4. The composite material according to claim 1, wherein the thermoplastic resin is substantially not impregnated within the fiber bundle of the organic filament.

5. The composite material according to claim 1, wherein the volume ratio of the thermoplastic resin is 20 to 900 parts based on 100 parts of the organic filament.

6. The composite material according to claim 1, wherein the weight per unit area of the organic filament per 10 of the thickness of the composite material is 1,000 to 12,000 g/m$^2$.

7. The composite material according to claim 1, wherein the twist count of the twisted yarn cord is 10 to 1,000 per 1 m.

8. The composite material according to claim 1, wherein the organic filament is polyester filament or nylon filament.

9. The composite material according to claim 8, wherein the polyester filament contains polyalkyleneterephthalate and/or polyalkylenenaphthalate as a component of 95 mol% or more in the polyester.

10. The composite material according to claim 1, wherein the thermoplastic resin is at least one selected from a group consisting of polyolefin resin, polyamide resin, polycarbonate resin and polyester resin.

11. The composite material according to clam 1, wherein the absorbed energy in high speed punching test is 10 J or more with a test speed of 11 m/sec and opening diameter of test specimen holder of 40 mm and with a striker with a diameter of 10 mm.

12. A sandwich material using a high stiffness material composed of a fiber reinforced composite material containing a reinforced fiber having a specific modulus of elasticity (E) defined by the equation below of 2.5 or more as a skin material and the composite material according to claim 1 as a core material.

$$E = M/D/9.8 \qquad (1)$$

wherein E is specific modulus of elasticity, M is modulus of elasticity of fiber (MPa) and D is density of fiber (g/cm$^3$).

13. The sandwich material according to claim 12, wherein the reinforced fiber of the high stiffness material is at least one selected from a group consisting of carbon fiber, aramid fiber and glass fiber.

14. The sandwich material according to claim 12, wherein the volume ratio of the core material is 40 to 9,900 parts based on 100 parts of the skin material.

Fig. 1

Fig. 2

Fig. 3

<table>
<tr><td colspan="2">**INTERNATIONAL SEARCH REPORT**</td><td>International application No.<br><br>PCT/JP2010/071426</td></tr>
</table>

| A. CLASSIFICATION OF SUBJECT MATTER |
|---|
| *C08J5/04*(2006.01)i<br><br><br>According to International Patent Classification (IPC) or to both national classification and IPC |

| B. FIELDS SEARCHED |
|---|
| Minimum documentation searched (classification system followed by classification symbols)<br>C08J5/00-5/24<br><br> |
| Documentation searched other than minimum documentation to the extent that such documents are included in the fields searched<br>   Jitsuyo Shinan Koho       1922-1996   Jitsuyo Shinan Toroku Koho   1996-2011<br>   Kokai Jitsuyo Shinan Koho  1971-2011   Toroku Jitsuyo Shinan Koho   1994-2011 |
| Electronic data base consulted during the international search (name of data base and, where practicable, search terms used)<br><br><br> |

| C. DOCUMENTS CONSIDERED TO BE RELEVANT | | |
|---|---|---|
| Category* | Citation of document, with indication, where appropriate, of the relevant passages | Relevant to claim No. |
| A | JP 2007-63710 A (Teijin Techno Products Ltd.),<br>15 March 2007 (15.03.2007),<br>entire text<br>(Family: none) | 1-14 |
| A | JP 7-300378 A (Toray Industries, Inc.),<br>14 November 1995 (14.11.1995),<br>entire text<br>(Family: none) | 1-14 |
| A | JP 2001-226850 A (Mitsubishi Rayon Co., Ltd.),<br>21 August 2001 (21.08.2001),<br>entire text<br>(Family: none) | 1-14 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|
| Date of the actual completion of the international search<br>   11 January, 2011 (11.01.11) | Date of mailing of the international search report<br>   25 January, 2011 (25.01.11) |
| Name and mailing address of the ISA/<br>   Japanese Patent Office | Authorized officer |
| Facsimile No. | Telephone No. |

Form PCT/ISA/210 (second sheet) (July 2009)

**EP 2 505 603 A1**

<table>
<tr><td colspan="2" align="center">**INTERNATIONAL SEARCH REPORT**</td><td>International application No.<br>*PCT/JP2010/071426*</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-243148 A  (Toray Industries, Inc.),<br>19 September 1995 (19.09.1995),<br>entire text<br>(Family: none) | 1-14 |
| A | JP 2009-184239 A  (Du Pont-Toray Co., Ltd.),<br>20 August 2009 (20.08.2009),<br>entire text<br>(Family: none) | 1-14 |
| A | JP 2006-3244 A  (Teijin Techno Products Ltd.),<br>05 January 2006 (05.01.2006),<br>entire text<br>(Family: none) | 1-14 |
| A | JP 2009-132772 A  (Mitsubishi Chemical Corp.),<br>18 June 2009 (18.06.2009),<br>entire text<br>(Family: none) | 1-14 |
| A | JP 7-149927 A  (Toray Industries, Inc.),<br>13 June 1995 (13.06.1995),<br>entire text<br>& US 5543212 A          & EP 657492 A1<br>& DE 69416957 C | 1-14 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002144395 A
- JP 2009530469 A

- WO 2009113555 A